# EUROPEAN PATENT APPLICATION

(11) **EP 4 561 023 A1**
(43) Date of publication of application: **28.05.2025**
(21) Application number: 23854159.3
(22) Date of filing: 11.07.2023
(51) Int. Cl.: H04L 67/141

(54) **COMMUNICATION METHOD AND APPARATUS**

(30) Priority: 17.08.2022 CN 202210987559
(71) Applicant: Huawei Technologies Co., Ltd., Shenzhen, Guangdong 518129 (CN)
(72) Inventor: ZHANG, Xudong, Shenzhen, Guangdong 518129 (CN); TANG, Weiping, Shenzhen, Guangdong 518129 (CN); LIU, Guoquan, Shenzhen, Guangdong 518129 (CN); WANG, Yali, Shenzhen, Guangdong 518129 (CN); WANG, Jian, Shenzhen, Guangdong 518129 (CN)
(74) Representative: MERH-IP Matias Erny Reichl Hoffmann Patentanwälte PartG mbB
(86) International application number: PCT/CN2023/106766
(87) International publication number: WO 2024/037254

(57) **Abstract**

A communication method and apparatus are provided. The method includes: A first device initiates, to a second device, a request for starting data transmission from the first device to the second device; the second device performs an acknowledgment reply to the request; and the first device may transmit data to the second device when the first device does not send an acknowledgment response for the acknowledgment reply to the second device. According to this application, unidirectional data transmission can be independently controlled, and data transmission efficiency can be improved.

## Description

This application claims priority to Chinese Patent Application No. 202210987559.2, filed with the China National Intellectual Property Administration on August 17, 2022 and entitled "COMMUNICATION METHOD AND APPARATUS", which is incorporated herein by reference in its entirety.

### TECHNICAL FIELD

This application relates to communication technologies, and in particular, to a communication method and apparatus.

### BACKGROUND

"Connection-oriented (connection-oriented)" is a network protocol for managing data transmission between a sender and a receiver based on explicit communication and blocking between the sender and the receiver. A connection-oriented service means that two communication parties need to establish a communication connection before communication.

A transmission control protocol (transmission control protocol, TCP) is a transport layer protocol that can provide a connection-oriented service. Although the TCP can implement reliable transmission between two communication parties, efficiency of data transmission between the two communication parties is low.

### SUMMARY

This application discloses a communication method and apparatus, to independently control a unidirectional communication connection, so as to help improve data transmission efficiency.

According to a first aspect, this application provides a communication method. The method is applied to a first device; and the method includes: sending a first control packet to a second device, where the first control packet includes first transport control option information, and the first transport control option information is used to request to start data transmission from the first device to the second device; receiving a second control packet from the second device, where the second control packet includes second transport control option information, and the second transport control option information is used to acknowledge start of the data transmission from the first device to the second device; and sending first data to the second device when a response packet for the second control packet is not sent to the second device.

The first device may be, for example, a handheld terminal, a vehicle, a vehicle-mounted device, a network side device, user equipment, an access terminal, a subscriber unit, a subscriber station, a mobile station, a remote station, a remote terminal, a wireless communication device, a user agent, or a user apparatus. Alternatively, the first device may be any possible smart terminal device (for example, a mobile phone), smart transportation device (for example, a vehicle or an uncrewed aerial vehicle), smart manufacturing device, smart home device (for example, a large screen or a speaker), or the like. Alternatively, the first device may be a component (for example, a chip or an integrated circuit) in the electronic device.

For example, the first transport control option information is carried in a transport control option field in a packet header of the first control packet. The transport control option field may carry the first transport control option information in a bit mapping manner, a binary value manner, or another manner. Correspondingly, the second transport control option information is carried in a transport control option field in a packet header of the second control packet.

In the foregoing method, the first device sends, to the second device, a request for starting the data transmission from the first device to the second device. This can independently control start of unidirectional data transmission. In addition, the first device can transmit the data to the second device without sending the acknowledgment response for the acknowledgment reply to the second device. This helps improve data transmission efficiency.

Optionally, the data transmission from the first device to the second device is performed based on a unidirectional communication connection.

The foregoing implementation is implemented, so that establishment of the unidirectional communication connection is also implemented. Compared with the conventional technology in which two communication parties establish a bidirectional communication connection through a three-way handshake, this application can implement independent control of the unidirectional communication connection. To be specific, the first device serves as a data sender, and does not need to locally reserve a resource used to receive data from the second device before sending data to the second device. This can quickly and efficiently implement the data transmission from the first device to the second device.

Optionally, the sending first data to the second device when a response packet for the second control packet is not sent to the second device includes any one of the following cases: carrying the first data via the first control packet; after sending the first control packet and before receiving the second control packet, sending a first data packet that carries the first data to the second device; or after receiving the second control packet, sending a first data packet that carries the first data to the second device.

Herein, carrying the first data via the first control packet means that the control packet in this application may carry data.

Compared with the conventional technology in which the sender can transmit the data to a peer end only after the two communication parties establish the communication connection through the three-way handshake, in this application, the first device serving as the data sender does not need to perform a third handshake in the conventional technology, and may further start data transmission as early as possible, for example, after a packet used to request to start the data transmission carries the data, or after a packet used to request to start the data transmission is sent, or after a reply sent by the second device to acknowledge start of the data transmission is received. This effectively reduces a transmission delay of a first piece of service data of the first device, and improves data transmission efficiency.

Optionally, the first control packet further includes source port information and/or destination port information, the source port information is used to carry an identifier of a first application that is on the first device and that is used to send data, and the destination port information is used to carry an identifier of a second application that is on the second device and that is used to receive data. Herein, the first application and the second application may be a same application, or may be different applications.

For example, the source port information is carried in a source port field in the packet header of the first control packet, and the destination port information is carried in a destination port field in the packet header of the first control packet.

The foregoing implementation is implemented, so that a receiver of the first control packet may learn of, based on the source port information in the first control packet, a source application that is on the first device and that is used to send the data, and may learn of, based on the destination port information in the first control packet, a destination application that is on the second device and that is used to receive the data.

Optionally, the first control packet further includes sequence number information and/or acknowledgment sequence number information, the sequence number information is used to carry a sending sequence number of the first control packet, and the acknowledgment sequence number information is used to carry an acknowledgment sequence number of the first control packet.

For example, the sequence number information is carried in a sequence number field in the packet header of the first control packet, and the acknowledgment sequence number information is carried in an acknowledgment sequence number field in the packet header of the first control packet.

A sending sequence number is a number used by the sender to sort sent packets. Generally, each time the sender sends a packet that carries a control primitive indicating start (used to request to start data transmission from the sender to a receiver), end (used to request to terminate data transmission from the sender to a receiver), or reset (used to reset unidirectional data transmission or bidirectional data transmission) or a packet that carries new data, the sending sequence number changes. When the sender retransmits the packet, the sending sequence number carried in the packet remains unchanged.

An acknowledgment sequence number is usually obtained by the receiver based on the sending sequence number carried in the packet sent by the sender. The sender may determine, based on the acknowledgment sequence number carried in the received packet, whether the packet sent by the sender is successfully received by the receiver and which packet is successfully received by the receiver.

For example, a rule for filling in the sequence number field may be as follows: If the first device sends, for the first time, a packet that carries an indication start or start ack (used to acknowledge start of the data transmission from the receiver to the sender), the sending sequence number may start from a random positive integer, or may use a maximum value of sending sequence numbers of packets sent in a previous transmission period; and each time a packet that carries a control primitive indicating start, end, or reset or a packet that carries new data is sent, the sending sequence number is incremented by 1. Otherwise, the sending sequence number remains unchanged. For example, when the first device retransmits the packet, the sending sequence number remains unchanged. It may be understood that the sequence number field is mainly used to determine a transmission sequence. In addition to the foregoing example in which the sending sequence number of the packet changes in ascending order, the sending sequence number of the packet may alternatively change in descending order. This is not specifically limited herein.

For example, a rule for filling in the acknowledgment sequence number field may be as follows: When the first device has not received a packet from the second device, the acknowledgment sequence number field is filled with 0. When the first device has historically received a packet from the second device, the acknowledgment sequence number field is filled with a maximum value in a plurality of consecutive sending sequence numbers of packets received by the first device from the second device. It may be understood that, when no packet loss occurs in a packet historically sent by the second device to the first device, the acknowledgment sequence number filled in the acknowledgment sequence number field by the first device may alternatively be a sending sequence number of a packet last received by the first device from the second device. The rule for filling in the acknowledgment sequence number may alternatively be another feasible manner. This is not specifically limited herein.

According to the foregoing implementation, because the first device sequentially transmits data, the sequence number information can be used to ensure that the data is sequentially transmitted at a transport layer, and the second device may determine, based on the acknowledgment sequence number information in the first control packet, whether a packet loss occurs on the second device.

In an implementation, the first transport control option information is carried in an option field of the first control packet, the first control packet further includes option length information, and the option length information is used to carry a length of the option field.

For example, the option length information is carried in an option length field in the packet header of the first control packet.

According to the foregoing implementation, whether the option field is empty may be determined based on a value of the option length field.

In an implementation, the option field is further used to carry at least one of the following information:
checksum option information, where the checksum option information is used to carry the packet header of the first control packet and a checksum of to-be-sent data;
payload length option information, where the payload length option information is used to carry a length of a payload field in the first control packet, and the payload field is used to carry data sent by the first device;
window size option information, where the window size option information is used to carry buffer space that is in a resource configured by the second device and that may be used to receive data from the first device; and
option mapping information, where the option mapping information is used to indicate whether optional information such as the first transport control option information, the checksum option information, the payload length option information, or the window size option information is carried in the option field.

For example, in the first control packet, the checksum option information is carried in a checksum option field in the option field, the payload length option information is carried in a payload length option field in the option field, and the window size option information is carried in a window size option field in the option field, and the option mapping information is carried in an option mapping field in the option field.

For example, the window size option information is usually set by the data receiver. In this way, the receiver may reversely affect a data sending rate of the sender and/or a size of the to-be-sent data based on the window size option information.

For example, the option mapping information indicates, in a form of a bitmap, which optional information is carried in the option field, where a plurality of bits one-to-one correspond to a plurality of types of option information. The transport control option field is used as an example. The transport control option field corresponds to a first bit in the option mapping field. When the first bit is set to 1, it indicates that the option field includes the transport control option field.

In an implementation, after the sending a first data packet to the second device, the method further includes: resending the first data packet when a response packet for the first data packet is not received within preset duration.

According to the foregoing implementation, when the first device does not receive the response packet for the first data packet, the first device retransmits the first data packet. This can improve transmission reliability.

Optionally, after the sending a first data packet that carries the first data to the second device, the method further includes: receiving a first response packet from the second device; and determining, based on an acknowledgment sequence number carried in the first response packet and a sending sequence number carried in the first data packet, whether to resend the first data packet.

According to the foregoing implementation, the first device may determine, by comparing the sequence number carried in the first data packet with the acknowledgment sequence number carried in the first response packet, whether the first data packet sent by the first device is successfully received by the second device, and retransmit the first data packet when the first data packet is not successfully received by the second device. This can improve transmission reliability.

Optionally, the first response packet further includes first window size option information, and the first window size option information is used to carry first buffer space that is in the resource configured by the second device and that may be used to receive data from the first device; and the method further includes: adjusting the data sending rate and/or the size of the to-be-sent data based on the first window size option information.

For example, the first window size option information is carried in a window size option field in a packet header of the first response packet.

According to the foregoing implementation, the first device may adaptively adjust the data transmission rate and/or the size of the to-be-sent data based on the window size option information in the packet sent by the second device. This helps improve data transmission efficiency and transmission reliability.

Optionally, the adjusting the data sending rate and/or the size of the to-be-sent data based on the first window size option information includes: when the first buffer space is less than a first preset threshold, reducing the data sending rate and/or reducing the size of the to-be-sent data; or when the first buffer space is greater than a second preset threshold, increasing the data sending rate and/or increasing the size of the to-be-sent data, where the second preset threshold is greater than or equal to the first preset threshold.

According to the foregoing implementation, when the first buffer space is small, the first device may reduce the data sending rate and/or reduce a size of data sent each time, so that the second device can clear, within specific duration, data that has been received in a storage resource, to increase buffer space that may be used to receive data in the storage resource. This helps improve transmission reliability and reduce a packet loss. When the first buffer space is sufficient, the first device may increase the data sending rate of the first device and/or a size of data sent each time. In this way, data transmission efficiency is improved.

Optionally, the adjusting the data sending rate based on the first window size option information includes: when the first buffer space is less than a third preset threshold, suspending sending data to the second device. The method further includes: receiving a second response packet from the second device, where the second response packet includes second window size option information, and the second window size option information carries second buffer space that is in the resource configured by the second device and that may be used to receive data from the first device; and when a sending sequence number carried in the second response packet is greater than or equal to a sending sequence number carried in the first response packet, and the second buffer space is not less than the third preset threshold, continuing to send data to the second device.

The third preset threshold is less than the first preset threshold.

Herein, that a sending sequence number carried in the second response packet is greater than or equal to a sending sequence number carried in the first response packet indicates that the second response packet carries any of control primitives indicating start, end, and reset, or carries data on a second device side.

For example, to improve transmission reliability, the second response packet may be sent by the second device for a plurality of times. When the first device receives the second response packet, if the sending sequence number carried in the second response packet is greater than or equal to the sending sequence number of the first response packet, the first device needs to perform corresponding processing on the second response packet, and cannot consider the second response packet as a duplicate packet and discard the second response packet.

For example, to improve transmission reliability, a response packet of a data packet may be sent by the second device for a plurality of times. When the first device receives the response packet, if a sending sequence number carried in the response packet is greater than or equal to a maximum value of sending sequence numbers of packets received from the second device in a current transmission period, and the response packet carries the option field, the first device needs to perform corresponding processing on the response packet, and cannot consider the response packet as a duplicate packet and discard the response packet. Herein, the option field includes at least one of the foregoing option information.

According to the foregoing implementation, when the first buffer space is less than the third preset threshold, it indicates that the buffer space that is in the resource configured by the second device and that may be used to receive the data from the first device is severely insufficient. In this case, the first device may actively suspend data transmission to the second device. When the buffer space that is in the resource configured by the second device and that may be used to receive the data from the first device is sufficient, the first device continues to transmit the data to the second device. In this way, the packet loss can be reduced.

Optionally, the method further includes: sending a third control packet to the second device, where the third control packet includes third transport control option information, and the third transport control option information is used to request to terminate the data transmission from the first device to the second device; and receiving a fourth control packet from the second device, where the fourth control packet includes fourth transport control option information, and the fourth transport control option information is used to acknowledge termination of the data transmission from the first device to the second device.

According to the foregoing implementation, after the first device receives an acknowledgment reply of the second device for requesting to terminate the data transmission from the first device to the second device, the first device determines that the data transmission from the first device to the second device ends.

Optionally, the first device is configured with a first state machine, and the first state machine is configured to: when the first device is in an initial state, in response to an event of starting to send data, switch the first device from the initial state to a waiting start acknowledgment state, for the first device to perform an action of sending the first control packet to the second device.

Herein, the initial state indicates that the data transmission from the first device to the second device is not started, in other words, the first device does not request the second device to start the data transmission from the first device to the second device.

The waiting start acknowledgment state indicates that the first device waits for the second device to reply with an acknowledgment of starting the data transmission from the first device to the second device.

Herein, the event of starting to send data means that the first device has a requirement for transmitting data to the second device.

According to the foregoing implementation, when the unidirectional data transmission is started, the first device may manage, through the first state machine, a communication connection status of the first device when the first device serves as a data sender.

Optionally, the first state machine is further configured to: when the first device is in the waiting start acknowledgment state, in response to an event of receiving the second control packet, switch the first device from the waiting start acknowledgment state to a sending data state.

Herein, the sending data state indicates that the first device learns that the data transmission from the first device to the second device has been successfully started. In this state, the first device may sequentially transmit the data to the second device.

Optionally, the first state machine is further configured to: when the first device is in the sending data state, in response to an event of finishing sending data, switch the first device from the sending data state to a waiting end acknowledgment state, for the first device to perform an action of sending the third control packet to the second device, where the third control packet includes the third transport control option information, and the third transport control option information is used to request to terminate the data transmission from the first device to the second device.

Herein, the event of finishing sending data means that the first device completes transmission of a last piece of data and the first device no longer sends data to the second device in the current transmission period.

The waiting end acknowledgment state indicates that the first device waits for the second device to reply with an acknowledgment of terminating the data transmission from the first device to the second device.

Optionally, the first state machine is further configured to: when the first device is in the waiting end acknowledgment state, in response to an event of receiving the fourth control packet, switch the first device from the waiting end acknowledgment state to the initial state, where the fourth control packet includes the fourth transport control option information, and the fourth transport control option information is used to acknowledge termination of the data transmission from the first device to the second device.

Optionally, the first state machine is further configured to: when the first device is in any one of the waiting start acknowledgment state, the sending data state, and the waiting end acknowledgment state, in response to a local fault event or an event of receiving a fifth control packet sent by the second device, switch the first device to a resetting state, for the first device to perform a reset operation, and for the first device to further perform an action of sending a sixth control packet to the second device when a local fault occurs, where the fifth control packet includes fifth transport control option information, and the fifth transport control option information is used to reset the data transmission from the first device to the second device; and the sixth control packet includes sixth transport control option information, and the sixth transport control option information is used to reset the data transmission from the first device to the second device.

For example, the local fault event includes at least one of a lower-layer protocol (for example, a network layer protocol or a data link layer protocol) disconnection event, a data transmission failure event, and the like.

Herein, the resetting state indicates that the first device resets the data transmission from the first device to the second device.

It can be learned that when the first device needs to reset the data transmission from the first device to the second device, the second device also needs to reset the data transmission from the first device to the second device.

Optionally, the first state machine is further configured to: when the first device is in the resetting state, in response to a reset completion event, switch the first device from the resetting state to the initial state.

The reset completion event means that the first device has locally completed the reset operation.

Optionally, the second transport control option information of the second control packet is further used to request to start data transmission from the second device to the first device. After the receiving a second control packet from the second device, the method further includes: The first device configures a resource used to receive data from the second device; and the first device sends a seventh control packet to the second device, where the seventh control packet includes seventh transport control option information, and the seventh transport control option information is used to acknowledge start of the data transmission from the second device to the first device.

The data transmission from the second device to the first device is performed based on a unidirectional second communication connection. Herein, the second communication connection is a communication connection for transmitting data from the second device to the first device.

According to the foregoing implementation, the second control packet not only implements an acknowledgment reply to a request of the first device for starting the data transmission, but also implements a request of the first device for starting the data transmission from the second device to the first device. In this way, the bidirectional data transmission between the first device and the second device is started based on two independent unidirectional connections. This helps improve data transmission efficiency.

For example, the second device may not combine and send, via one packet, the acknowledgment reply to the request of the first device for starting the data transmission and the request that is for starting the data transmission from the second device to the first device and that is proposed by the second device, that is, separately send the acknowledgment reply and the request via two packets. For example, if the first device has a requirement for transmitting data to the second device, but the second device currently has no requirement for transmitting data to the first device, the first device first receives an acknowledgment reply of the second device for requesting to start the data transmission from the first device to the second device. When the second device has a requirement for transmitting data to the first device, the first device receives a packet that is sent by the second device and that is used to request to start the data transmission from the second device to the first device.

Optionally, after the sending a seventh control packet to the second device, the method further includes: receiving a second data packet from the second device, where the second data packet carries second data; and sending a third data packet to the second device, where the third data packet carries third data, and an acknowledgment sequence number carried in the third data packet is a sending sequence number carried in the second data packet.

For example, an occasion on which the first device receives the second data from the second device is not limited to an occasion after the first device sends the seventh control packet to the second device, and the occasion on which the first device receives the second data from the second device may alternatively be earlier. For example, the second data is carried in the second control packet, or before the first device sends the seventh control packet to the second device, the first device receives the second data packet from the second device. This is not specifically limited herein.

It can be learned that the third data packet is not only an acknowledgment reply to the second data packet, but also carries new data. In this way, bandwidth consumption can be reduced.

Optionally, the method further includes: receiving an eighth control packet from the second device, where the eighth control packet includes eighth transport control option information, and the eighth transport control option information is used to request to terminate the data transmission from the second device to the first device; releasing, based on the eighth control packet, the resource that is configured by the first device and that is used to receive the data from the second device; and sending a ninth control packet to the second device, where the ninth control packet includes ninth transport control option information, and the ninth transport control option information is used to acknowledge termination of the data transmission from the second device to the first device.

According to the foregoing implementation, after the first device receives the packet that is sent by the second device and that is used to request to terminate the data transmission from the second device to the first device, the first device releases the resource locally allocated for receiving the data from the second device, and sends, to the second device, an acknowledgment reply to the request for terminating the data transmission. In this way, the data transmission from the second device to the first device ends.

Optionally, the first device is configured with a second state machine, and the second state machine is configured to: when the first device is in an initial state, in response to the event of receiving the second control packet, switch the first device from the initial state to a receiving data state, for the first device to perform an action of sending the seventh control packet to the second device.

Herein, the initial state indicates that the data transmission from the second device to the first device is not started.

The receiving data state indicates that the first device completes configuration of the resource used to receive the data from the second device and waits to receive the data transmitted by the second device.

According to the foregoing implementation, when the bidirectional data transmission is started, two independent state machines (the first state machine and the second state machine) are configured on the first device, so that management of a connection status in a case in which a same device serves as a sender and management of a connection status in a case in which the device serves as a receiver are independently decoupled. For example, when the first device serves as the data sender, the first device maintains the communication connection status through the first state machine; and when the first device serves as the data receiver, the first device maintains a communication connection status through the second state machine. This can effectively simplify management of the device on the communication connection status.

Optionally, the second state machine is further configured to: when the first device is in the receiving data state, in response to an event of receiving the eighth control packet, switch the first device from the receiving data state to a pending end state, for the first device to perform an action of releasing the local storage resource, and an action of sending the ninth control packet to the second device, where the eighth control packet includes the eighth transport control option information, and the eighth transport control option information is used to request to terminate the data transmission from the second device to the first device; and the ninth control packet includes the ninth transport control option information, and the ninth transport control option information is used to acknowledge termination of the data transmission from the second device to the first device.

Herein, the pending end state indicates that the first device releases the resource that is configured by the first device and that is used to receive the data from the second device, that is, the first device stops receiving the data from the second device.

Optionally, the second state machine is further configured to: when the first device is in the pending end state, in response to an end completion event, switch the first device from the pending end state to the initial state.

Herein, the end completion event means that the first device finishing releasing the configured resource used to receive the data from the second device.

Optionally, the second state machine is further configured to: when the first device is in the receiving data state or the pending end state, in response to a local fault event or an event of receiving a tenth control packet sent by the second device, switch the first device to a resetting state, for the first device to perform a reset operation, and for the first device to further perform an action of sending an eleventh control packet to the second device when a local fault occurs, where the tenth control packet includes tenth transport control option information, and the tenth transport control option information is used to reset the data transmission from the second device to the first device; and the eleventh control packet includes eleventh transport control option information, and the eleventh transport control option information is used to reset the data transmission from the second device to the first device.

Herein, the local fault event includes at least one of the lower-layer protocol (for example, the network layer protocol or the data link layer protocol) disconnection event, a packet sending failure event, and the like.

The resetting state indicates that the first device resets the data transmission from the second device to the first device.

It can be learned that when the first device needs to reset the data transmission from the second device to the first device, the second device also needs to reset the data transmission from the second device to the first device.

Optionally, the eleventh transport control option information is further used to reset the data transmission from the first device to the second device.

According to the foregoing implementation, the first device may reset the bidirectional data transmission based on the eleventh transport control option information.

Optionally, the second state machine is further configured to: when the first device is in the resetting state, in response to a reset completion event, switch the first device from the resetting state to the initial state.

Herein, the reset completion event means that the first device has locally completed the reset operation.

According to a second aspect, this application provides a communication method. The method is applied to a second device, and the method includes: receiving a first control packet from a first device, where the first control packet includes first transport control option information, and the first transport control option information is used to request to start data transmission from the first device to the second device; configuring a resource used to receive data from the first device, and sending a second control packet to the first device, where the second control packet includes second transport control option information, and the second transport control option information is used to acknowledge start of the data transmission from the first device to the second device; and receiving first data from the first device when a response packet for the second control packet is not received from the first device.

The second device may be, for example, a handheld terminal, a vehicle, a vehicle-mounted device, a network side device, user equipment, an access terminal, a subscriber unit, a subscriber station, a mobile station, a remote station, a remote terminal, a wireless communication device, a user agent, or a user apparatus. Alternatively, the second device may be any possible smart terminal device (for example, a mobile phone), smart transportation device (for example, a vehicle or an uncrewed aerial vehicle), smart manufacturing device, smart home device (for example, a large screen or a speaker), or the like. Alternatively, the second device may be a component (for example, a chip or an integrated circuit) in the electronic device.

For example, the first transport control option information is carried in a transport control option field in a packet header of the first control packet. The transport control option field may carry the first transport control option information in a bit mapping manner, a binary value manner, or another manner. Correspondingly, the second transport control option information is carried in a transport control option field in a packet header of the second control packet.

In the foregoing method, the second device allocates the storage resource to the first device based on a request that is sent by the first device and that is for starting the data transmission from the first device to the second device, and sends an acknowledgment reply to the request to the first device. In this way, unidirectional data transmission is started. In addition, the data can be received from the first device without receiving an acknowledgment response that is sent by the first device and that is for the acknowledgment reply. This helps improve data transmission efficiency.

Optionally, the data transmission from the first device to the second device is performed based on a unidirectional communication connection. For technical effect of this feature, refer to the descriptions of the technical effect of the corresponding feature in the first aspect. Details are not described herein again.

Optionally, the receiving first data from the first device when a response packet for the second control packet is not received from the first device includes any one of the following cases: carrying the first data via the first control packet; after receiving the first control packet and before sending the second control packet, receiving a first data packet that carries the first data from the first device; or after sending the second control packet, receiving a first data packet that carries the first data from the first device.

Compared with the conventional technology in which a receiver can receive data transmitted by a peer end only after two communication parties establish a communication connection through a three-way handshake, in this application, the second device does not need to perform a third handshake in the conventional technology, and can receive the data from the first device earlier. This improves data transmission efficiency.

Optionally, the first control packet further includes source port information and/or destination port information, the source port information is used to carry an identifier of a first application that is on the first device and that is used to send data, and the destination port information is used to carry an identifier of a second application that is on the second device and that is used to receive data.

Optionally, the first control packet further includes sequence number information and/or acknowledgment sequence number information, the sequence number information is used to carry a sending sequence number of the first control packet, and the acknowledgment sequence number information is used to carry an acknowledgment sequence number of the first control packet.

In an implementation, the first transport control option information is carried in an option field of the first control packet, the first control packet further includes option length information, and the option length information is used to carry a length of the option field.

In an implementation, the option field is further used to carry at least one of the following information:
checksum option information, where the checksum option information is used to carry the packet header of the first control packet and a checksum of to-be-sent data;
payload length option information, where the payload length option information is used to carry a length of a payload field in the first control packet, and the payload field is used to carry data sent by the first device;
window size option information, where the window size option information is used to carry a resource that is in a resource configured by the second device and that may be used to receive data from the first device; and
option mapping information, where the option mapping information is used to indicate whether optional information such as the first transport control option information, the checksum option information, the payload length option information, or the window size option information is carried in the option field.

For specific technical effect of the fields in the first control packet, refer to the descriptions of the corresponding fields in the first control packet in the first aspect. Details are not described herein again.

Optionally, after the receiving a first data packet that carries the first data from the first device, the method further includes: sending a first response packet to the first device, where an acknowledgment sequence number carried in the first response packet is a sending sequence number carried in the first data packet.

According to the foregoing implementation, after receiving the data packet from the first device, the second device sends an acknowledgment reply of the data packet to the first device. In this way, the first device may determine, based on the acknowledgment reply, that the second device successfully receives the data packet.

Optionally, the first response packet further includes first window size option information, the first window size option information is used to carry first buffer space that is in the resource configured by the second device and that may be used to receive data from the first device, and the first window size option information is used by the second device to reversely adjust a data sending rate of the first device and/or adjust a size of the to-be-sent data.

According to the foregoing implementation, the second device may include the window size option information in the packet, so that the first device adaptively adjusts the data transmission rate and/or the size of the to-be-sent data.

Optionally, when it is detected that the first buffer space is less than a first warning value, the first response packet further includes the first window size option information.

According to the foregoing implementation, when detecting that the buffer space that is in the locally configured resource and that may be used to receive data from the first device is insufficient, the second device may include the window size option information in the packet, to prompt the first device to perform corresponding adjustment.

Optionally, the method further includes: clearing received data in the storage resource; and when it is detected that second buffer space that is in the resource configured by the second device and that may be used to receive data from the first device is greater than a second warning value, sending a second response packet to the first device for at least one time, where the second response packet includes second window size option information, the second window size option information is used to carry the second buffer space, and the second warning value is greater than or equal to the first warning value.

According to the foregoing implementation, when detecting that the buffer space that is in the locally configured resource and that may be used to receive data from the first device is sufficient, the second device may also include the window size option information in the packet, to prompt the first device to perform corresponding adjustment. To improve transmission reliability, the packet that carries the window size option information may be sent by the second device for a plurality of times.

Optionally, the method further includes: receiving a third control packet from the first device, where the third control packet includes third transport control option information, and the third transport control option information is used to request to terminate the data transmission from the first device to the second device; and releasing, based on the third control packet, the resource that is configured by the second device and that is used to receive the data from the first device; and sending a fourth control packet to the first device, where the fourth control packet includes fourth transport control option information, and the fourth transport control option information is used to acknowledge termination of the data transmission from the first device to the second device.

According to the foregoing implementation, the second device releases, based on a request that is received from the first device and that is for terminating the data transmission from the first device to the second device, the locally configured resource used to receive the data from the first device, and sends an acknowledgment reply to the first device to notify the first device.

Optionally, the first device is configured with a first state machine, and the first state machine is configured to: when the first device is in an initial state, in response to an event of receiving the first control packet, switch the first device from the initial state to a receiving data state, for the second device to perform an action of sending the second control packet to the first device.

Herein, the initial state indicates that the second device does not start the data transmission from the first device to the second device.

The receiving data state indicates that the second device completes configuration of the resource used to receive the data from the first device and waits to receive the data transmitted by the first device.

According to the foregoing implementation, when the unidirectional data transmission is started, the second device may manage, through the first state machine, a communication connection status of the second device when the second device serves as a data receiver.

Optionally, the first state machine is further configured to: when the second device is in the receiving data state, in response to an event of receiving the third control packet, switch the second device from the receiving data state to a pending end state, for the second device to perform an action of releasing the resource that is configured by the second device and that is used to receive the data from the first device and an action of sending the fourth control packet to the first device, where the third control packet includes the third transport control option information, and the third transport control option information is used to request to terminate the data transmission from the first device to the second device; and the fourth control packet includes the fourth transport control option information, and the fourth transport control option information is used to acknowledge termination of the data transmission from the first device to the second device.

Herein, the pending end state indicates that the second device releases the resource that is configured by the second device and that is used to receive the data from the first device, that is, the second device stops receiving the data from the first device.

Optionally, the first state machine is further configured to: when the second device is in the pending end state, in response to an end completion event, switch the second device from the pending end state to the initial state.

Herein, the end completion event means that the second device finishing releasing the configured resource used to receive the data from the first device.

Optionally, the first state machine is further configured to: when the second device is in the receiving data state or the pending end state, in response to a local fault event or an event of receiving a fifth control packet sent by the second device, switch the second device to a resetting state, for the second device to perform a reset operation, and for the second device to further perform an action of sending a sixth control packet to the first device when a local fault occurs, where the fifth control packet includes fifth transport control option information, and the fifth transport control option information is used to reset the data transmission from the first device to the second device; and the sixth control packet includes sixth transport control option information, and the sixth transport control option information is used to reset the data transmission from the first device to the second device.

Herein, the resetting state indicates that the second device resets the data transmission from the first device to the second device.

The local fault event includes at least one of a lower-layer protocol (for example, a network layer protocol or a data link layer protocol) disconnection event, a packet sending failure event, and the like.

Optionally, the first state machine is further configured to: when the second device is in the resetting state, in response to a reset completion event, switch the second device from the resetting state to the initial state.

Herein, the reset completion event means that the second device has locally completed the reset operation.

Optionally, the second transport control option information of the second control packet is further used to request to start data transmission from the second device to the first device. After the sending a second control packet to the first device, the method further includes: receiving a seventh control packet from the first device, where the seventh control packet includes seventh transport control option information, and the seventh transport control option information is used to acknowledge start of the data transmission from the second device to the first device.

According to the foregoing implementation, the second control packet not only implements an acknowledgment reply to a request of the first device for starting the data transmission, but also implements a request of the first device for starting the data transmission from the second device to the first device. In this way, the bidirectional data transmission between the first device and the second device is started based on two independent unidirectional connections. This helps improve data transmission efficiency.

For example, the second device may not combine and send, via one packet, the acknowledgment reply to the request of the first device for starting the data transmission and the request that is for starting the data transmission from the second device to the first device and that is proposed by the second device, that is, separately send the acknowledgment reply and the request via two packets. For example, if the first device has a requirement for transmitting data to the second device, but the second device currently has no requirement for transmitting data to the first device, the second device may first send, to the first device, an acknowledgment reply for requesting to start the data transmission from the first device to the second device. When the second device has a requirement for transmitting data to the first device, the second device sends, to the first device, a packet for requesting to start the data transmission from the second device to the first device.

Optionally, the method further includes: sending a second data packet to the first device, where the second data packet carries the second data; and receiving a third data packet from the first device, where the third data packet carries third data, and an acknowledgment sequence number carried in the third data packet is a sending sequence number carried in the second data packet.

It can be learned that the third data packet is not only an acknowledgment reply to the second data packet, but also carries new data. In this way, bandwidth consumption can be reduced.

For example, an occasion on which the second device sends the second data to the first device may be: The second data is carried in the second control packet, or the second device sends the second data packet to the first device before receiving the seventh control packet from the first device, or the second device sends the second data packet to the first device after receiving the seventh packet from the first device.

Optionally, the method further includes: sending an eighth control packet to the first device, where the eighth control packet includes eighth transport control option information, and the eighth transport control option information is used to request to terminate the data transmission from the second device to the first device; and receiving a ninth control packet from the first device, where the ninth control packet includes ninth transport control option information, and the ninth transport control option information is used to acknowledge termination of the data transmission from the second device to the first device.

According to the foregoing implementation, after the second device receives an acknowledgment reply of the first device for requesting to terminate the data transmission from the second device to the first device, the second device may learn that the data transmission from the second device to the first device ends.

Optionally, the second device is configured with a second state machine, and the second state machine is configured to: when the second device is in an initial state, in response to an event of starting to send data, switch the second device from the initial state to a waiting start acknowledgment state, for the second device to perform the action of sending the second control packet to the second device.

Herein, the initial state indicates that the data transmission from the second device to the first device is not started.

The waiting start acknowledgment state indicates that the second device waits for the first device to reply with an acknowledgment of starting the data transmission from the second device to the first device.

Herein, the event of starting to send data means that the second device has a requirement for transmitting data to the first device.

According to the foregoing implementation, when the bidirectional data transmission is started, two independent state machines (the first state machine and the second state machine) are configured on the second device, so that management of a connection status in a case in which a same device serves as a sender and management of a connection status in a case in which the device serves as a receiver are independently decoupled. For example, when the second device serves as a data receiver, the second device maintains the communication connection status through the first state machine; and when the second device serves as a data sender, the second device maintains a communication connection status through the second state machine. This can effectively simplify management of the device on the communication connection status.

Optionally, the second state machine is further configured to: when the second device is in the waiting start acknowledgment state, in response to an event of receiving the seventh control packet, switch the second device from the waiting start acknowledgment state to a sending data state.

Herein, the sending data state indicates that the second device learns that the data transmission from the second device to the first device has been successfully started. In this state, the second device may sequentially transmit data to the first device.

Optionally, the second state machine is further configured to: when the second device is in the sending data state, in response to an event of finishing sending the data, switch the second device from the sending data state to a waiting end acknowledgment state, for the second device to perform an action of sending the eighth control packet to the first device, where the eighth control packet includes the eighth transport control option information, and the eighth transport control option information is used to request to terminate the data transmission from the second device to the first device.

Herein, the event of finishing sending the data means that the second device completes transmission of a last piece of data and the second device no longer sends data to the first device in a current transmission period.

The waiting end acknowledgment state indicates that the second device waits for the first device to reply with an acknowledgment of terminating the data transmission from the second device to the first device.

Optionally, the second state machine is further configured to: when the second device is in the waiting end acknowledgment state, in response to an event of receiving the ninth control packet, switch the second device from the waiting end acknowledgment state to the initial state, where the ninth control packet includes the ninth transport control option information, and the ninth transport control option information is used to acknowledge termination of the data transmission from the second device to the first device.

Optionally, the second state machine is further configured to: when the second device is in any one of the waiting start acknowledgment state, the sending data state, and the waiting end acknowledgment state, in response to a local fault event or an event of receiving a tenth control packet sent by the first device, switch the second device to a resetting state, for the second device to perform a reset operation, and for the second device to further perform an action of sending an eleventh control packet to the first device when a local fault occurs, where the tenth control packet includes tenth transport control option information, and the tenth transport control option information is used to reset the data transmission from the second device to the first device; and the eleventh control packet includes eleventh transport control option information, and the eleventh transport control option information is used to reset the data transmission from the second device to the first device.

For example, the local fault event includes at least one of the lower-layer protocol (for example, the network layer protocol or the data link layer protocol) disconnection event, a data transmission failure event, and the like.

Herein, the resetting state indicates that the second device resets the data transmission from the second device to the first device.

It can be learned that when the second device needs to reset the data transmission from the second device to the first device, the first device also needs to reset the data transmission from the second device to the first device.

Optionally, the eleventh transport control option information is further used to reset the data transmission from the first device to the second device.

According to the foregoing implementation, the second device may reset the bidirectional data transmission based on the eleventh transport control option information.

Optionally, the second state machine is further configured to: when the second device is in the resetting state, in response to a reset completion event, switch the second device from the resetting state to the initial state.

Herein, the reset completion event means that the second device has locally completed the reset operation.

According to a third aspect, this application provides a communication apparatus. The apparatus is a first device or the apparatus is included in the first device. The apparatus includes: a sending unit, configured to send a first control packet to a second device, where the first control packet includes first transport control option information, and the first transport control option information is used to request to start data transmission from the first device to the second device; and a receiving unit, configured to receive a second control packet from the second device, where the second control packet includes second transport control option information, and the second transport control option information is used to acknowledge start of the data transmission from the first device to the second device, where the sending unit is further configured to send first data to the second device when a response packet for the second control packet is not sent to the second device.

Optionally, the data transmission from the first device to the second device is performed based on a unidirectional communication connection.

Optionally, the sending unit is specifically configured to: carry the first data via the first control packet; after the first control packet is sent and before the second control packet is received, send a first data packet that carries the first data to the second device; or after the second control packet is received, send a first data packet that carries the first data to the second device.

Optionally, the first control packet further includes source port information and/or destination port information, the source port information is used to carry an identifier of a first application that is on the first device and that is used to send data, and the destination port information is used to carry an identifier of a second application that is on the second device and that is used to receive data.

Optionally, the first control packet further includes sequence number information and/or acknowledgment sequence number information, the sequence number information is used to carry a sending sequence number of the first control packet, and the acknowledgment sequence number information is used to carry an acknowledgment sequence number of the first control packet.

In an implementation, the first transport control option information is carried in an option field of the first control packet, the first control packet further includes option length information, and the option length information is used to carry a length of the option field.

In an implementation, the option field is further used to carry at least one of the following information:
checksum option information, where the checksum option information is used to carry the packet header of the first control packet and a checksum of to-be-sent data;
payload length option information, where the payload length option information is used to carry a length of a payload field in the first control packet, and the payload field is used to carry data sent by the first device;
window size option information, where the window size option information is used to carry a resource that is in a resource configured by the second device and that may be used to receive data from the first device; and
option mapping information, where the option mapping information is used to indicate whether optional information such as the first transport control option information, the checksum option information, the payload length option information, or the window size option information is carried in the option field.

In an implementation, the sending unit is further configured to resend the first data packet when no response packet for the first data packet is received within preset duration.

Optionally, the receiving unit is further configured to receive a first response packet from the second device. The apparatus further includes a processing unit, configured to determine, based on an acknowledgment sequence number carried in the first response packet and a sending sequence number carried in the first data packet, whether to resend the first data packet.

Optionally, the first response packet further includes first window size option information, and the first window size option information is used to carry first buffer space that is in the resource configured by the second device and that may be used to receive data from the first device. The processing unit is further configured to: adjust a data sending rate and/or a size of to-be-sent data based on the first window size option information.

Optionally, the processing unit is specifically configured to: when the first buffer space is less than a first preset threshold, reduce the data sending rate and/or reduce the size of the to-be-sent data; or when the first buffer space is greater than a second preset threshold, increase the data sending rate and/or increase the size of the to-be-sent data, where the second preset threshold is greater than or equal to the first preset threshold.

Optionally, the sending unit is further configured to: when the first buffer space is less than a third preset threshold, suspend sending data to the second device. The receiving unit is further configured to receive a second response packet from the second device, where the second response packet includes second window size option information, and the second window size option information carries second buffer space that is in the resource configured by the second device and that may be used to receive data from the first device. The sending unit is further configured to: when a sending sequence number carried in the second response packet is greater than or equal to a sending sequence number carried in the first response packet, and the second buffer space is not less than the third preset threshold, continue to send data to the second device.

Optionally, the sending unit is further configured to send a third control packet to the second device, where the third control packet includes third transport control option information, and the third transport control option information is used to request to terminate the data transmission from the first device to the second device. The receiving unit is further configured to receive a fourth control packet from the second device, where the fourth control packet includes fourth transport control option information, and the fourth transport control option information is used to acknowledge termination of the data transmission from the second device to the first device.

Optionally, the first device is configured with a first state machine, and the first state machine is configured to: when the first device is in an initial state, in response to an event of starting to send data, switch the first device from the initial state to a waiting start acknowledgment state, for the first device to perform an action of sending the first control packet to the second device.

Optionally, the first state machine is further configured to: when the first device is in the waiting start acknowledgment state, in response to an event of receiving the second control packet, switch the first device from the waiting start acknowledgment state to a sending data state.

Optionally, the first state machine is further configured to: when the first device is in the sending data state, in response to an event of finishing sending data, switch the first device from the sending data state to a waiting end acknowledgment state, for the first device to perform an action of sending the third control packet to the second device, where the third control packet includes the third transport control option information, and the third transport control option information is used to request to terminate the data transmission from the first device to the second device.

Optionally, the first state machine is further configured to: when the first device is in the waiting end acknowledgment state, in response to an event of receiving the fourth control packet, switch the first device from the waiting end acknowledgment state to the initial state, where the fourth control packet includes the fourth transport control option information, and the fourth transport control option information is used to acknowledge termination of the data transmission from the first device to the second device.

Optionally, the first state machine is further configured to: when the first device is in any one of the waiting start acknowledgment state, the sending data state, and the waiting end acknowledgment state, in response to a local fault event or an event of receiving a fifth control packet sent by the second device, switch the first device to a resetting state, for the first device to perform a reset operation, and for the first device to further perform an action of sending a sixth control packet to the second device when a local fault occurs, where the fifth control packet includes fifth transport control option information, and the fifth transport control option information is used to reset the data transmission from the first device to the second device; and the sixth control packet includes sixth transport control option information, and the sixth transport control option information is used to reset the data transmission from the first device to the second device.

Optionally, the first state machine is further configured to: when the first device is in the resetting state, in response to a reset completion event, switch the first device from the resetting state to the initial state.

Optionally, the second transport control option information of the second control packet is further used to request to start data transmission from the second device to the first device. The processing unit is further configured to configure a resource used to receive data from the second device. The sending unit is further configured to send a seventh control packet to the second device, where the seventh control packet includes seventh transport control option information, and the seventh transport control option information is used to acknowledge start of the data transmission from the second device to the first device.

Optionally, the receiving unit is further configured to receive a second data packet from the second device, where the second data packet carries second data. The sending unit is further configured to send a third data packet to the second device, where the third data packet carries third data, and an acknowledgment sequence number carried in the third data packet is a sending sequence number carried in the second data packet.

Optionally, the receiving unit is further configured to receive an eighth control packet from the second device, where the eighth control packet includes eighth transport control option information, and the eighth transport control option information is used to request to terminate the data transmission from the second device to the first device. The sending unit is further configured to: release, based on the eighth control packet, the resource that is configured by the first device and that is used to receive the data from the second device; and send a ninth control packet to the second device, where the ninth control packet includes ninth transport control option information, and the ninth transport control option information is used to acknowledge termination of the data transmission from the second device to the first device.

Optionally, the first device is configured with a second state machine, and the second state machine is configured to: when the first device is in an initial state, in response to the event of receiving the second control packet, switch the first device from the initial state to a receiving data state, for the first device to perform an action of sending the seventh control packet to the second device.

Optionally, the second state machine is further configured to: when the first device is in the receiving data state, in response to an event of receiving the eighth control packet, switch the first device from the receiving data state to a pending end state, for the first device to perform an action of releasing the resource that is configured by the first device and that is used to receive the data from the second device, and an action of sending the ninth control packet to the second device, where the eighth control packet includes the eighth transport control option information, and the eighth transport control option information is used to request to terminate the data transmission from the second device to the first device; and the ninth control packet includes the ninth transport control option information, and the ninth transport control option information is used to acknowledge termination of the data transmission from the second device to the first device.

Optionally, the second state machine is further configured to: when the first device is in the pending end state, in response to an end completion event, switch the first device from the pending end state to the initial state.

Optionally, the second state machine is further configured to: when the first device is in the receiving data state or the pending end state, in response to a local fault event or an event of receiving a tenth control packet sent by the second device, switch the first device to a resetting state, for the first device to perform a reset operation, and for the first device to further perform an action of sending an eleventh control packet to the second device when a local fault occurs, where the tenth control packet includes tenth transport control option information, and the tenth transport control option information is used to reset the data transmission from the second device to the first device; and the eleventh control packet includes eleventh transport control option information, and the eleventh transport control option information is used to reset the data transmission from the second device to the first device.

Optionally, the eleventh transport control option information is further used to reset the data transmission from the first device to the second device.

Optionally, the second state machine is further configured to: when the first device is in the resetting state, in response to a reset completion event, switch the first device from the resetting state to the initial state.

According to a fourth aspect, this application provides a communication apparatus. The apparatus is a second device or the apparatus is included in the second device. The apparatus includes: a receiving unit, configured to receive a first control packet from a first device, where the first control packet includes first transport control option information, and the first transport control option information is used to request to start data transmission from the first device to the second device; a processing unit, configured to configure a resource used to receive data from the first device; and a sending unit, configured to send a second control packet to the first device, where the second control packet includes second transport control option information, and the second transport control option information is used to acknowledge start of the data transmission from the first device to the second device, where the sending unit is further configured to receive first data from the first device when a response packet for the second control packet is not received from the first device.

Optionally, the data transmission from the first device to the second device is performed based on a unidirectional communication connection.

Optionally, the receiving unit is specifically configured to: carry the first data via the first control packet; after the first control packet is received and before the second control packet is sent, receive a first data packet that carries the first data from the first device; or after the second control packet is sent, receive a first data packet that carries the first data from the first device.

Optionally, the first control packet further includes source port information and/or destination port information, the source port information is used to carry an identifier of a first application that is on the first device and that is used to send data, and the destination port information is used to carry an identifier of a second application that is on the second device and that is used to receive data.

Optionally, the first control packet further includes sequence number information and/or acknowledgment sequence number information, the sequence number information is used to carry a sending sequence number of the first control packet, and the acknowledgment sequence number information is used to carry an acknowledgment sequence number of the first control packet.

In an implementation, the first transport control option information is carried in an option field of the first control packet, the first control packet further includes option length information, and the option length information is used to carry a length of the option field.

In an implementation, the option field is further used to carry at least one of the following information:
checksum option information, where the checksum option information is used to carry the packet header of the first control packet and a checksum of to-be-sent data;
payload length option information, where the payload length option information is used to carry a length of a payload field in the first control packet, and the payload field is used to carry data sent by the first device;
window size option information, where the window size option information is used to carry a resource that is in a resource configured by the second device and that may be used to receive data from the first device; and
option mapping information, where the option mapping information is used to indicate whether optional information such as the first transport control option information, the checksum option information, the payload length option information, or the window size option information is carried in the option field.

Optionally, the sending unit is further configured to send a first response packet to the first device, where an acknowledgment sequence number carried in the first response packet is a sending sequence number carried in the first data packet.

Optionally, the first response packet further includes first window size option information, the first window size option information is used to carry first buffer space that is in the resource configured by the second device and that may be used to receive data from the first device, and the first window size option information is used by the second device to reversely adjust a data sending rate of the first device and/or adjust a size of the to-be-sent data.

Optionally, when it is detected that the first buffer space is less than a first warning value, the first response packet further includes the first window size option information.

Optionally, the processing unit is further configured to clear received data in the resource configured by the second device. The sending unit is further configured to: when it is detected that second buffer space that is in the resource configured by the second device and that may be used to receive data from the first device is greater than a second warning value, send a second response packet to the first device for at least one time, where the second response packet includes second window size option information, the second window size option information is used to carry the second buffer space, and the second warning value is greater than or equal to the first warning value.

Optionally, the receiving unit is further configured to receive a third control packet from the first device, where the third control packet includes third transport control option information, and the third transport control option information is used to request to terminate the data transmission from the first device to the second device. The processing unit is further configured to release, based on the third control packet, the resource that is configured by the second device and that is used to receive the data from the first device. The sending unit is further configured to send a fourth control packet to the first device, where the fourth control packet includes fourth transport control option information, and the fourth transport control option information is used to acknowledge termination of the data transmission from the first device to the second device.

Optionally, the first device is configured with a first state machine, and the first state machine is configured to: when the first device is in an initial state, in response to an event of receiving the first control packet, switch the first device from the initial state to a receiving data state, for the second device to perform an action of sending the second control packet to the first device.

Optionally, the first state machine is further configured to: when the second device is in the receiving data state, in response to an event of receiving the third control packet, switch the second device from the receiving data state to a pending end state, for the second device to perform an action of releasing the resource that is configured by the second device and that is used to receive the data from the first device and an action of sending the fourth control packet to the first device, where the third control packet includes the third transport control option information, and the third transport control option information is used to request to terminate the data transmission from the first device to the second device; and the fourth control packet includes the fourth transport control option information, and the fourth transport control option information is used to acknowledge termination of the data transmission from the first device to the second device.

Optionally, the first state machine is further configured to: when the second device is in the pending end state, in response to an end completion event, switch the second device from the pending end state to the initial state.

Optionally, the first state machine is further configured to: when the second device is in the receiving data state or the pending end state, in response to a local fault event or an event of receiving a fifth control packet sent by the second device, switch the second device to a resetting state, for the second device to perform a reset operation, and for the second device to further perform an action of sending a sixth control packet to the first device when a local fault occurs, where the fifth control packet includes fifth transport control option information, and the fifth transport control option information is used to reset the data transmission from the first device to the second device; and the sixth control packet includes sixth transport control option information, and the sixth transport control option information is used to reset the data transmission from the first device to the second device.

Optionally, the first state machine is further configured to: when the second device is in the resetting state, in response to a reset completion event, switch the second device from the resetting state to the initial state.

Optionally, the second transport control option information of the second control packet is further used to request to start data transmission from the second device to the first device. The receiving unit is further configured to receive a seventh control packet from the first device, where the seventh control packet includes seventh transport control option information, and the seventh transport control option information is used to acknowledge start of the data transmission from the second device to the first device.

Optionally, the sending unit is further configured to send a second data packet to the first device, where the second data packet carries the second data. The receiving unit is further configured to receive a third data packet from the first device, where the third data packet carries third data, and an acknowledgment sequence number carried in the third data packet is a sending sequence number carried in the second data packet.

Optionally, the sending unit is further configured to send an eighth control packet to the first device, where the eighth control packet includes eighth transport control option information, and the eighth transport control option information is used to request to terminate the data transmission from the second device to the first device. The receiving unit is further configured to receive a ninth control packet from the first device, where the ninth control packet includes ninth transport control option information, and the ninth transport control option information is used to acknowledge termination of the data transmission from the second device to the first device.

Optionally, the second device is configured with a second state machine, and the second state machine is configured to: when the second device is in an initial state, in response to an event of starting to send data, switch the second device from the initial state to a waiting start acknowledgment state, for the second device to perform the action of sending the second control packet to the second device.

Optionally, the second state machine is further configured to: when the second device is in the waiting start acknowledgment state, in response to an event of receiving the seventh control packet, switch the second device from the waiting start acknowledgment state to a sending data state.

Optionally, the second state machine is further configured to: when the second device is in the sending data state, in response to an event of finishing sending the data, switch the second device from the sending data state to a waiting end acknowledgment state, for the second device to perform an action of sending the eighth control packet to the first device, where the eighth control packet includes the eighth transport control option information, and the eighth transport control option information is used to request to terminate the data transmission from the second device to the first device.

Optionally, the second state machine is further configured to: when the second device is in the waiting end acknowledgment state, in response to an event of receiving the ninth control packet, switch the second device from the waiting end acknowledgment state to the initial state, where the ninth control packet includes the ninth transport control option information, and the ninth transport control option information is used to acknowledge termination of the data transmission from the second device to the first device.

Optionally, the second state machine is further configured to: when the second device is in any one of the waiting start acknowledgment state, the sending data state, and the waiting end acknowledgment state, in response to a local fault event or an event of receiving a tenth control packet sent by the first device, switch the second device to a resetting state, for the second device to perform a reset operation, and for the second device to further perform an action of sending an eleventh control packet to the first device when a local fault occurs, where the tenth control packet includes tenth transport control option information, and the tenth transport control option information is used to reset the data transmission from the second device to the first device; and the eleventh control packet includes eleventh transport control option information, and the eleventh transport control option information is used to reset the data transmission from the second device to the first device.

Optionally, the eleventh transport control option information is further used to reset the data transmission from the first device to the second device.

Optionally, the second state machine is further configured to: when the second device is in the resetting state, in response to a reset completion event, switch the second device from the resetting state to the initial state.

According to a fifth aspect, this application provides a communication apparatus. The apparatus includes a processor and a memory, and the memory is configured to store program instructions. The processor invokes the program instructions in the memory, so that the apparatus performs the method in any one of the first aspect or the possible implementations of the first aspect, or the apparatus performs the method in the second aspect or any one of the possible implementations of the second aspect.

According to a sixth aspect, this application provides a computer-readable storage medium, including computer instructions. When the computer instructions are run by a processor, the method in any one of the first aspect or the possible implementations of the first aspect is implemented, or the method according to any one of the second aspect or the possible implementations of the second aspect is implemented.

According to a seventh aspect, this application provides a computer program product. When the computer program product is executed by a processor, the method in any one of the first aspect or the possible implementations of the first aspect is implemented, or the method in any one of the second aspect or the possible implementations of the second aspect is implemented.

For example, the computer program product may be a software installation package.

According to an eighth aspect, this application provides a vehicle. The vehicle includes a first apparatus or a second apparatus. The first apparatus is the apparatus in any one of the third aspect or the possible implementations of the third aspect, or the apparatus in the fifth aspect. The second apparatus is the apparatus in any one of the fourth aspect or the possible implementations of the fourth aspect, or the apparatus in the fifth aspect.

According to a ninth aspect, this application provides a terminal. The terminal includes a first apparatus or a second apparatus. The first apparatus is the apparatus in any one of the third aspect or the possible implementations of the third aspect, or the apparatus in the fifth aspect. The second apparatus is the apparatus in any one of the fourth aspect or the possible implementations of the fourth aspect, or the apparatus in the fifth aspect.

Examples of the terminal include but are not limited to: smart home devices (such as a television, a robotic vacuum cleaner, a smart desk lamp, a sound system, a smart lighting system, an electrical control system, home background music, a home theater system, an intercom system, and video surveillance), smart transportation devices (such as a vehicle, a ship, an uncrewed aerial vehicle, a train, a lorry, and a truck), smart manufacturing devices (such as a robot, an industrial device, smart logistics, and a smart factory), and smart terminals (such as a mobile phone, a computer, a tablet computer, a palmtop computer, a desktop computer, a headset, a speaker, a wearable device, a vehicle-mounted device, a virtual reality device, and an augmented reality device).

### BRIEF DESCRIPTION OF DRAWINGS

FIG. 1 is a diagram of an architecture of a system according to an embodiment of this application;
FIG. 2 is a diagram of a format of a packet header according to an embodiment of this application;
FIG. 3A is a diagram of a format of an option field according to an embodiment of this application;
FIG. 3B is a diagram of a format of an option field according to an embodiment of this application;
FIG. 4 is a flowchart of a communication method according to an embodiment of this application;
FIG. 5A is a diagram of states of a state machine configured on a sender according to an embodiment of this application;
FIG. 5B is a diagram of states of a state machine configured on a receiver according to an embodiment of this application;
FIG. 6 is a flowchart of another communication method according to an embodiment of this application;
FIG. 7 is a flowchart of another communication method according to an embodiment of this application;
FIG. 8 is a flowchart of another communication method according to an embodiment of this application;
FIG. 9A is a diagram of a structure of a communication apparatus according to an embodiment of this application;
FIG. 9B is a diagram of a structure of a communication apparatus according to an embodiment of this application; and
FIG. 10 is a diagram of a structure of a communication device according to an embodiment of this application.

### DESCRIPTION OF EMBODIMENTS

It should be noted that prefix words such as "first" and "second" are used in this application only to distinguish between different described objects, and have no limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether "field" modified by "first" and "field" modified by "second" are in a same message, and do not limit a sequence of the "first field" and the "second field". For another example, if the described objects are "levels", ordinal numbers before "level" in a "first level" and a "second level" do not limit priorities of the "levels". For another example, a quantity of described objects is not limited by a prefix word, and may be one or more. A "first device" is used as an example. A quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, in embodiments of this application, use of the prefix words used to distinguish between the described objects constitutes no limitation on the described objects. For descriptions of the described object, refer to context descriptions in claims or embodiments. Use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

The following describes technical solutions in embodiments of this application with reference to accompanying drawings.

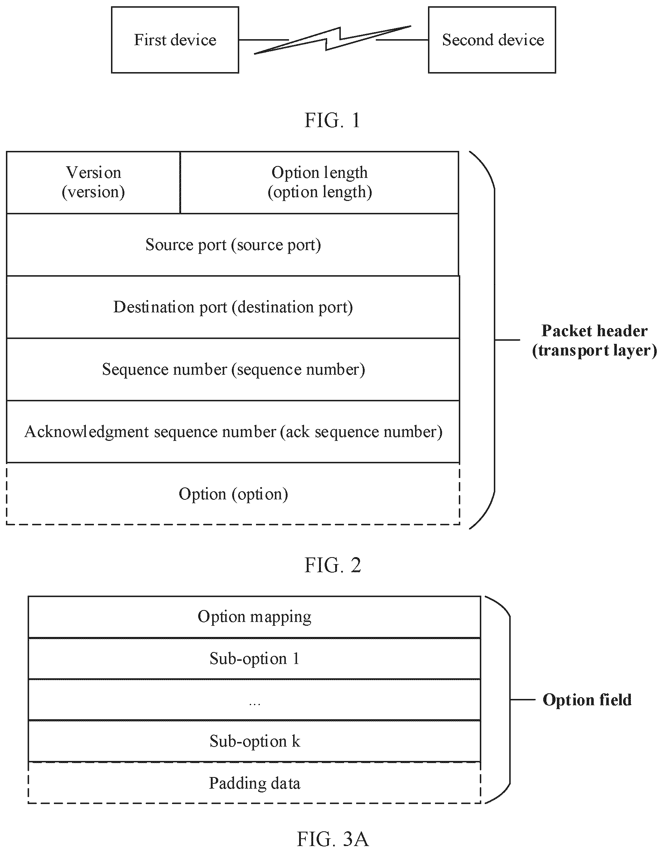

FIG. 1 is an example diagram of an architecture of a system. The system is configured to implement communication. As shown in FIG. 1, the system includes a first device and a second device. The first device may communicate with the second device in a wired or wireless manner.

The first device or the second device may be an electronic device having a communication capability, for example, a handheld terminal, a vehicle, a vehicle-mounted device, a network side device, user equipment, an access terminal, a subscriber unit, a subscriber station, a mobile station, a remote station, a remote terminal, a wireless communication device, a user agent, or a user apparatus. Alternatively, the first device or the second device may be any possible smart terminal device (for example, a mobile phone), smart transportation device (for example, a vehicle or an uncrewed aerial vehicle), smart manufacturing device, smart home device (for example, a large screen or a speaker), or the like. Alternatively, the first device or the second device may be a component (for example, a chip or an integrated circuit) in the electronic device.

The first device is used as an example. When the first device is a vehicle-mounted device, the first device may be a cockpit domain (cockpit domain) device or a module in a cockpit domain device, for example, one or more of modules such as a cockpit domain controller (cockpit domain controller, CDC), a camera, a screen, a microphone, a speaker, an electronic key, and a keyless entry or startup system controller. In a vehicle, the first device may alternatively be a battery management system (battery management system, BMS), a battery control unit (battery control unit, BCU) in a BMS, a battery monitoring unit (battery monitoring unit, BMU) in a BMS, or a battery in a battery pack.

For example, when the first device is a handheld terminal, the first device may be a mobile phone (mobile phone), a wearable device, a tablet computer (pad), or a computer (for example, a notebook computer or a palmtop computer) with a data receiving and sending function.

For example, when the first device has a requirement for sending service data to the second device, the first device may request the second device to start data transmission from the first device to the second device. After the first device receives an acknowledgment reply that is sent by the second device and that is used to acknowledge start of the data transmission, the first device determines that the data transmission from the first device to the second device has started. To improve data transmission efficiency, for example, the first device may transmit data to the second device in a process of requesting to start data transmission. It may be understood that only a brief description of a unidirectional communication connection between the first device and the second device is provided herein. For a specific process, refer to related descriptions in the following method embodiments. However, embodiments of this application do not limit data transmission to a transmission direction from the first device to the second device, and the data transmission may be in a transmission direction from the second device to the first device. In addition, communication between the first device and the second device may alternatively be bidirectional communication. For details, refer to related descriptions in the following method embodiments. Details are not described herein.

The communication system shown in FIG. 1 may be applied to a plurality of application scenarios, for example, mobile internet (mobile internet, MI), industrial control (industrial control), self-driving (self-driving), transportation safety (transportation safety), internet of things (internet of things, IoT), a smart city (smart city), or a smart home (smart home).

The communication system shown in FIG. 1 may be applied to a plurality of network types, for example, SparkLink (SparkLink), a long term evolution (long term evolution, LTE) network, a fifth generation mobile communication technology (5th generation mobile communication technology, 5G), a wireless local area network (for example, Wi-Fi), Bluetooth (Bluetooth, BT), ZigBee (ZigBee), or a vehicle short-range wireless communication network.

It may be understood that the foregoing device is a name of an electronic device having a communication capability. In some application scenarios or some network types, a name of a device having a similar communication capability may not be referred to as a device, for example, referred to as a network device or a node. This is not specifically limited herein.

It should be noted that FIG. 1 is merely the example diagram of the architecture, but a quantity of network elements included in the system shown in FIG. 1 is not limited. Although not shown in FIG. 1, in addition to the functional entities shown in FIG. 1, FIG. 1 may further include another functional entity. In addition, a method provided in embodiments of this application may be applied to the communication system shown in FIG. 1. Certainly, the method provided in embodiments of this application may also be applied to another communication system. This is not limited in embodiments of this application.

To enable information transmission between the first device and the second device to meet at least one of high efficiency, low overheads, a low delay, and high reliability, an embodiment of this application defines a packet header used for a transport layer. For example, the packet header may also be referred to as a transport layer packet header or a lightweight connection mode transport protocol (lightweight connection mode transport protocol, LWCTP) header.

In this embodiment of this application, the LWCTP header may support running at a network layer or a data link layer of a communication network. Herein, the communication network may be, for example, a SparkLink network, an internet protocol (Internet Protocol, IP) network, or another type of network. This is not specifically limited herein.

For example, an address used in the SparkLink network is a SparkLink network address. The SparkLink network address is a network layer short address, and a length of the SparkLink network address may be 2 bytes (that is, 16 bits). The SparkLink network address may be used for addressing in the SparkLink network. It may be understood that the SparkLink network address is an address of another type different from an IP address.

For example, if the communication network is the SparkLink network, the LWCTP header may support running at the SparkLink network layer, that is, the LWCTP header is encapsulated in a SparkLink network layer frame header. The LWCTP header may also support running at a SparkLink basic service layer, that is, the LWCTP header is encapsulated in a SparkLink basic service layer frame header.

For another example, the communication network may be the IP network, and the LWCTP header may support running at a network layer of the IP network, that is, the LWCTP header is encapsulated in an IP header. The IP header may be, for example, an IPv4 header or an IPv6 header.

The following specifically describes, based on FIG. 2, the LWCTP header provided in embodiments of this application. FIG. 2 is a diagram of a format of an LWCTP header according to an embodiment of this application.

In this embodiment of this application, the LWCTP header may be used to establish a communication connection between two devices, and may also be used to transmit information between the two devices.

In this embodiment of this application, a control primitive that is defined in an LWCTP and that is used to establish a communication connection is carried in a transport control option (transport control option) field of the LWCTP header. The transport control option field is included in an option (option) field shown in FIG. 2, and the option field is used to carry an optional field in the LWCTP header. Herein, the transport control option field is equivalent to a sub-option field in the option field.

For example, in this embodiment of this application, five control primitives are defined based on a communication connection establishment process, and are respectively:
(1) start start that indicates that a sender requests to start data transmission from the sender to a receiver (one transmission direction);
(2) start acknowledgment start ack that indicates that the receiver acknowledges start of the data transmission from the sender to the receiver;
(3) end end that indicates that the sender requests to terminate the data transmission from the sender to the receiver;
(4) end acknowledgment end ack that indicates that the receiver acknowledges termination of the data transmission from the sender to the receiver; and
(5) reset reset that indicates to reset the data transmission from the sender to the receiver, or may reset bidirectional data transmission between the sender and the receiver.

It may be understood that, that the sender sends a packet that carries a control primitive indicating start means that a transmission period of data transmission in one transmission direction is started. That the sender receives a packet that carries a control primitive indicating start ack indicates that unidirectional (from the sender to the receiver) data transmission is successfully started. It may also be understood that a communication connection for transmitting data from the sender to the receiver is successfully established, and the sender may sequentially transmit data to the receiver. After completing the data transmission, the sender may send, to the receiver, a packet that carries a control primitive indicating end, to request the receiver to terminate the data transmission from the sender to the receiver. After receiving a packet that is sent by the receiver and that carries a control primitive indicating end ack, the sender determines that the data transmission from the sender to the receiver has ended, and the transmission period ends. It can be learned that the transmission period of the data transmission includes three phases: transmission start, data transmission, and transmission end. In some possible embodiments, the three phases in the transmission period may alternatively overlap. For example, data transmission may start in the transmission start phase. In this case, for a specific interaction process between devices, refer to related descriptions in the following method embodiments. Details are not described herein.

For a representation manner of the transport control option field, a corresponding control primitive in the communication connection establishment process may be represented in a bit mapping manner or a binary value manner.

For example, that the transport control option field represents the control primitive in the binary value manner may be: When a value of the transport control option field is a first value, it indicates the control primitive "start"; or when a value of the transport control option field is a second value, it indicates the control primitive "start ack"; or when a value of the transport control option field is a third value, it indicates the control primitive "end"; or when a value of the transport control option field is a fourth value, it indicates the control primitive "end ack"; or when a value of the transport control option field is a fifth value, it indicates the control primitive "reset". In some possible embodiments, the transport control option field may further represent a plurality of control primitives. For example, when a value of the transport control option field is a sixth value, it indicates the control primitives "start ack" and "start". For another example, when a value of the transport control option field is a seventh value, it indicates the control primitives "end ack" and "end".

For example, that the transport control option field represents the control primitives in the bit mapping manner may be: The transport control option field includes a plurality of bits, and each bit may also be referred to as a flag. When a flag 1 in the transport control option field is set to 1, it indicates the control primitive "start"; when a flag 2 in the transport control option field is set to 1, it indicates the control primitive "start ack"; when a flag 3 in the transport control option field is set to 1, it indicates the control primitive "end"; when a flag 4 in the transport control option field is set to 1, it indicates the control primitive "end ack"; and/or when a flag 5 in the transport control option field is set to 1, it indicates the control primitive "reset".

In some possible embodiments, the transport control option field may alternatively simultaneously represent two control primitives. The bit mapping manner is used as an example. It is assumed that a packet header in a packet sent by the second device to the first device includes a transport control option field, and both a flag 1 and a flag 2 in the transport control option field are set to 1. In this case, the transport control option field indicates the two control primitives "start" and "start ack". It indicates that the second device acknowledges start of the data transmission from the first device to the second device and the second device requests the first device to start the data transmission from the second device to the first device. It may be understood that the two control primitives "start" and "start ack" are merely used as examples herein, but only this case in which the transport control option field can simultaneously represent the two control primitives is not limited.

In this embodiment of this application, the LWCTP header includes a source port (source port) field and/or a destination port (destination port) field. The source port field is used to carry an identifier of a source application that is on the sender and that needs to send data, and the destination port field is used to carry an identifier of a destination application that is on the receiver and that is used to receive data.

For example, an identifier of an application (for example, the source application or the destination application) is used to uniquely identify the application locally, and may be a combination of one or more characters. The character may be one or more of a digit, a letter, and another symbol. For example, the identifier may be a combination of one or more digits, or a combination of one or more digits and a letter.

In this embodiment of this application, the LWCTP header includes a sequence number (sequence number) field and/or an acknowledgment sequence number (ack sequence number) field. The sequence number field is used to carry a sending sequence number of a packet sent by the sender, and the acknowledgment sequence number field is used to carry an acknowledgment sequence number of the packet sent by the sender.

Herein, because the sender sequentially transmits the data, the sequence number field can be used to ensure orderly transmission of the data at the transport layer, and the receiver may determine, based on the acknowledgment sequence number field in the packet sent by the sender, whether a packet loss occurs on the receiver.

For example, for the sender, a rule for filling in the sequence number field may be as follows: If the sender sends, for the first time in a current transmission period, a packet that carries an indication start or start ack, the sending sequence number may start from a random positive integer, or may use a maximum value of sending sequence numbers of packets sent in a previous transmission period; and each time a packet that carries a control primitive indicating start, end, or reset or a packet that carries new data is sent, the sending sequence number is incremented by 1. Otherwise, the sending sequence number remains unchanged. For example, when the sender retransmits the packet, the sending sequence number remains unchanged. It may be understood that the sequence number field is mainly used to determine a transmission sequence. In addition to the foregoing example in which the sending sequence number of the packet changes in ascending order, the sending sequence number of the packet may alternatively change in descending order in another embodiment. This is not specifically limited herein.

For example, for the sender, a rule for filling in the acknowledgment sequence number field may be as follows: When the sender has not received a packet from the receiver in this transmission period, the acknowledgment sequence number field is filled with 0. When the sender has historically received a packet from the receiver, the acknowledgment sequence number field is filled with a maximum value in a plurality of consecutive sending sequence numbers of packets received by the sender from the receiver. It may be understood that, when no packet loss occurs in a packet historically sent by the receiver to the sender, an acknowledgment sequence number filled in the acknowledgment sequence number field by the sender may alternatively be a sending sequence number of a packet last received by the sender from the receiver.

In some possible embodiments, the LWCTP header further includes a version (version) field, and the version field is used to carry a version number in a transport layer protocol.

Herein, when the sender transmits data to the receiver, the packet sent by the sender further carries a payload field, where the payload field is used to carry data of the source application on the sender. For example, the data may also be referred to as service data or a service data unit (service data unit, SDU).

In this embodiment of this application, the LWCTP header further includes an option length (option length) field, and the option length field is used to carry a length of the option field. Whether the option field is empty may be determined based on a value of the option length field.

In some possible embodiments, the option field shown in FIG. 2 is used to carry the optional field in the LWCTP header, for example, the transport control option field. In addition, the option field may further include one or more of the following sub-option fields:
checksum option (checksum option) field, where the field is used to carry a checksum of the LWCTP header and to-be-sent data. Herein, the to-be-sent data is carried in the payload field of the packet;
window size option (window size option) field, where the field is used to carry buffer space that is in a resource configured by the receiver and that may be used to receive data from the sender; and
payload length option (payload length option) field, where the field is used to carry the length of the payload field.

Herein, when the packet includes the payload field, the option field may include a payload length option field, where the payload length option field is used to carry the length of the payload field. When the packet includes the payload field, if the option field does not include the payload length option field, the length of the payload field may be determined based on a frame length of an outer layer. For example, if the outer layer is the network layer, the length of the payload field may be determined based on a payload length field in a network layer packet header, or if the outer layer is the data link layer, the length of the payload field may be determined based on a payload length field in a data link layer packet header.

For example, for an application that has a message coding capability and an error correction capability, or that allows an error to be reported, for example, an application that processes audio and video information, the checksum option field (or referred to as a checksum field) may be default.

For example, a value of the window size option field is usually set by the receiver. In this way, the sender may adjust, based on a window size option field in an LWCTP header of a packet sent by the receiver, a data sending rate of the sender and/or a size of to-be-sent data, in other words, the receiver may reversely affect the data sending rate of the sender and/or the size of the to-be-sent data based on the window size option field.

In some possible embodiments, when the option field includes at least one sub-option field, to avoid a case in which a length field is newly added to indicate a length of each sub-option field in the option field. The length of each sub-option field may be set to be fixed. In this case, the option field may further include an option mapping field. The option mapping field indicates whether an optional sub-option field such as the at least one option field is carried in the option field.

For example, for content in the option field, refer to FIG. 3A. It can be learned from FIG. 3A that the option field includes the option mapping field and the at least one sub-option field (for example, a sub-option 1, ..., and a sub-option k, where k is a positive integer). In some possible embodiments, because the length of the option field is specified by the option length field, when a length of each field in the option field is less than the length indicated by the option length field, the option field further includes a padding data field. The padding data field may enable the length of the option field to meet the length indicated by the option length field.

For example, the option mapping field may indicate, in a bit mapping (or bitmap) manner, which optional sub-option fields are included in the option field. A plurality of bits one-to-one correspond to a plurality of sub-option fields. Herein, the plurality of sub-option fields include at least one of the transport control option field, the checksum option field, the window size option field, and the payload length option field. In some possible embodiments, the plurality of sub-option fields further include other optional sub-option fields such as an option field used for authentication, and a field used for encryption.

For example, a length of the option mapping field is 1 byte, that is, 8 bits, and each bit corresponds to one sub-option field. It may be understood that, when the option field includes a first sub-option field, a bit corresponding to the first sub-option field in the option mapping field is set to 1. In other words, a quantity of sub-option fields in the option field may be obtained based on a quantity of bits that are set to 1 in the option mapping field. In some possible embodiments, the length of the option mapping field is not limited to only one byte. For example, the length may alternatively be two bytes. The length of the option mapping field may be determined based on a maximum quantity of sub-option fields to be carried in the option field.

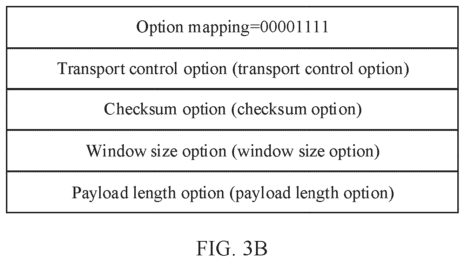

In some possible embodiments, in the option field, the at least one sub-option field is arranged based on a sequence of positions of bits that are set to 1 in the option mapping field. For example, FIG. 3B is a diagram of a format of an option field according to an embodiment of this application. In FIG. 3B, the length of the option mapping field is 1 byte, where four bits are set to 1, to indicate that the option field includes four sub-option fields. In addition, the four sub-option fields are sequentially arranged from top to bottom based on a sequence of bits that are set to 1 and that correspond to the four sub-option fields. Specifically, in the option mapping field shown in FIG. 3B, for example, from right to left, if the first bit is set to "1", it indicates that the transport control option field is included; if the second bit is set to "1", it indicates that the checksum option field is included, and the checksum option field is located after the transport control option field; when the third bit is set to "1", it indicates that the window size field is included, and the window size option field is located after the checksum option field; and when the fourth bit is set to "1", it indicates that the payload length field is included, and the payload length field is located after the window size option field. In some possible embodiments, the four sub-option fields shown in FIG. 3B may alternatively be sequentially arranged from bottom to top based on the sequence of bits that are set to 1 and that correspond to the four sub-option fields. This is not specifically limited herein.

It should be noted that the option field shown in FIG. 3B is merely an example, and does not limit content in the option field in the LWCTP header. In some possible embodiments, a quantity of fields in the option field may be less than a quantity of fields shown in FIG. 3B. For example, one or more of the transport control option field, the checksum option field, the window size option field, and the payload length option field may be default. In some possible embodiments, the quantity of fields in the option field may be greater than the quantity of fields shown in FIG. 3B. For example, a padding data field may be further added to the option field shown in FIG. 3B.

It can be learned that at least one of the packet header used for the transport layer, the payload field, and the option field that are provided in this embodiment of this application is optional, and the option field and the payload field may be selectively set based on a transmission control requirement. This can reduce unnecessary byte overheads, and help increase a valid payload proportion of the packet header.

The following describes, based on the foregoing defined packet header used for the transport layer, a communication method provided in embodiments of this application. The method may be applied to a communication system including a first device and a second device. For example, the first device may be the first device in FIG. 1, and the second device may be the second device in FIG. 1.

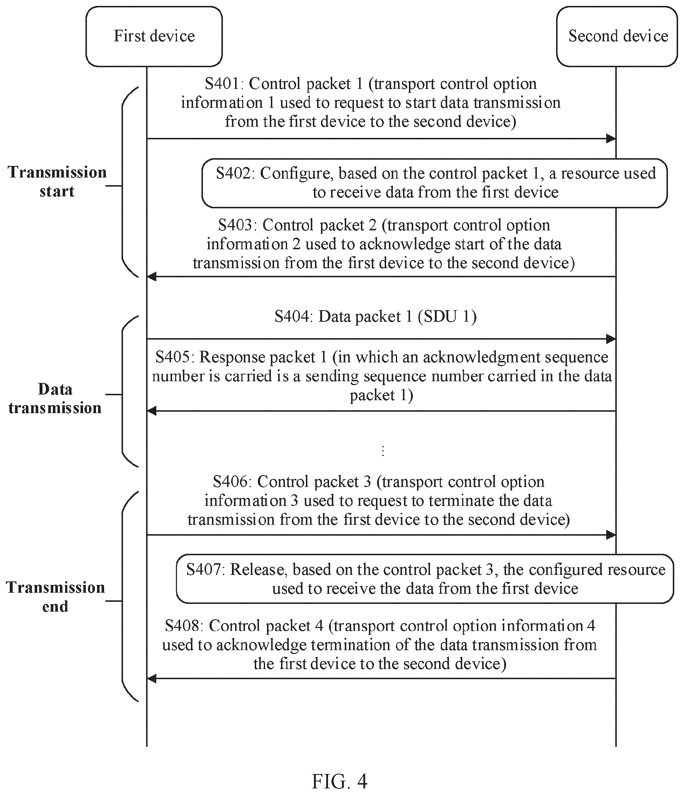

FIG. 4 is a flowchart of a communication method according to an embodiment of this application. It can be learned from FIG. 4 that the method may be divided into three phases: a transmission start phase, a data transmission phase, and a transmission end phase. It should be noted that a packet header in the embodiment in FIG. 4 is the foregoing defined packet header used for the transport layer, for example, the LWCTP header. The method includes but is not limited to the following steps.

### Phase 1: transmission start

S401: A first device sends a control packet 1 to a second device, where the control packet 1 includes transport control option information 1, and the transport control option information 1 is used to request to start data transmission from the first device to the second device.

Correspondingly, the second device receives the data packet 1 sent by the first device.

The data transmission from the first device to the second device is performed based on a unidirectional first communication connection. Herein, the first communication connection is a communication connection for transmitting data from the first device to the second device.

The transport control option information 1 is carried in a transport control option field in a packet header of the control packet 1. For example, the transport control option information 1 may be represented by using a bit in the transport control option field or by using a binary value of the transport control option field. This is not specifically limited herein. It may be understood that the transport control option information 1 is equivalent to the foregoing control primitive indicating "start".

For example, the control packet 1 further includes source port information and destination port information. If a first application on the first device has a requirement for sending data to a second application on the second device, the source port information may carry an identifier of the first application, and the destination port information may carry an identifier of the second application. It may be understood that the source port information may be carried in a source port field in the packet header of the control packet 1, and the destination port information may be carried in a destination port field in the packet header of the control packet 1.

Herein, the first application and the second application may be a same application, or may be different applications.

In this embodiment of this application, the first device may use a sequence number field in the packet header of the control packet 1 to carry a sending sequence number of the control packet 1, and use an acknowledgment sequence number field to carry an acknowledgment sequence number of the control packet 1. For filling of the sending sequence number field and the acknowledgment sequence number field, refer to the descriptions of the corresponding content in the embodiment in FIG. 2. Details are not described herein again.

In some possible embodiments, the transport control option information 1 may also be understood as being used to request to establish the first communication connection for transmitting the data from the first device to the second device. It may be understood that the first communication connection is a unidirectional communication connection.

S402: The second device configures, based on the control packet 1, a resource used to receive the data from the first device.

The resource locally configured by the second device includes storage resources such as a buffer and a status management area.

For example, the buffer may be used to store data subsequently obtained from the first device, and the status management area may be used to store local connection status information.

S403: The second device sends a control packet 2 to the first device, where the control packet 2 includes transport control option information 2, and the transport control option information 2 is used to acknowledge start of the data transmission from the first device to the second device.

In this way, the second device locally completes preparation for receiving the data from the first device.

Correspondingly, the first device receives the control packet 2 from the second device, and the first device may determine, based on the transport control option information 2 in the control packet 2, that the data transmission from the first device to the second device has been successfully started. This may also be understood as that the first communication connection has been successfully established, and the first device may sequentially transmit data.

The transport control option information 2 is carried in a transport control option field in a packet header of the control packet 2. For example, the transport control option information 2 may be represented by using a bit in the transport control option field or by using a binary value of the transport control option field. This is not specifically limited herein. It may be understood that the transport control option information 2 is equivalent to the foregoing control primitive indicating "start ack".

For example, if the sequence number field in the control packet 1 carries "100" and the acknowledgment sequence number field carries "0", in the control packet 2, a sequence number field may carry, for example, "200" (which is a random positive integer locally generated by the second device), and an acknowledgment sequence number field carries "100".

In this embodiment of this application, if the source port field in the control packet 1 is used to carry the identifier of the first application, and the destination port field in the control packet 1 is used to carry the identifier of the second application, in the control packet 2, a source port field is used to carry the identifier of the second application, and a destination port field is used to carry the identifier of the first application.

In some possible embodiments, the transport control option information 3 may also be understood as being used to acknowledge establishment of the first communication connection.

### Phase 2: data transmission

In the data transmission phase, an example in which data transmitted by the first device to the second device is a service data unit SDU is used for description.

S404: The first device sends a data packet 1 to the second device, where the data packet 1 carries an SDU 1.

It may be understood that, in this embodiment of this application, the SDU 1 is a first piece of service data sent by the first device.

For example, if the sequence number field in the control packet 2 is used to carry "200" and the acknowledgment sequence number field is used to carry "100", in the data packet 1, a sequence number field is used to carry "101", and an acknowledgment sequence number field is used to carry "200".

For example, in the data packet 1, a source port field is used to carry the identifier of the first application, and a destination port field is used to carry the identifier of the second application.

S405: The second device sends a response packet 1 to the first device, where an acknowledgment sequence number carried in the response packet 1 is a sending sequence number carried in the data packet 1.

Herein, the acknowledgment sequence number carried in the response packet 1 is the sending sequence number carried in the data packet 1. It indicates that the second device receives the data packet 1, and the response packet 1 is an acknowledgment reply to the data packet 1. Correspondingly, the first device receives the response packet 1 from the second device, and the first device may determine, based on the response packet 1, that the SDU 1 has been successfully transmitted to the second device.

It may be understood that, because only the unidirectional communication connection is established in the embodiment in FIG. 4, when the second device sends the response packet for the data packet, a sending sequence number of the response packet remains unchanged. Therefore, the sending sequence number carried in the response packet 1 may be the same as the acknowledgment sequence number carried in the data packet 1.

For example, if the sequence number field in the data packet 1 is used to carry "101" and the acknowledgment sequence number field is used to carry "200", in the response packet 1, a sequence number field is used to carry "200", and an acknowledgment sequence number field is used to carry "101".

For example, in the response packet 1, a source port field is used to carry the identifier of the second application, and a destination port field is used to carry the identifier of the first application.

S404 and S405 indicate that the first device completes one data transmission.

For example, in the data transmission phase, the first device may initiate a plurality of data transmissions to the second device, and transmit one SDU each time. In the embodiment in FIG. 4, only one transmission between the first device and the second device is listed in the data transmission phase. However, a quantity of data transmissions initiated by the first device to the second device is not limited in embodiments of this application. It may be understood that the quantity of data transmissions initiated by the first device to the second device is related to a quantity of SDUs to be sent by the first device.

In an implementation, each time the first device sends a data packet to the second device, the second packet may perform an acknowledgment reply to the received data packet. For example, it can be learned from S404 and S405 that the first device sends the data packet 1 to the second device, and the second device sends the response packet 1 to the first device, where the acknowledgment sequence number carried in the response packet 1 is the sending sequence number carried in the data packet 1. That is, the response packet 1 is the acknowledgment reply to the data packet 1.

In some possible embodiments, to improve data packet sending efficiency on a first device side, the first device does not need to wait for an acknowledgment from the second device for each data transmission. To be specific, the first device may consecutively send a plurality of packets that carry data to the second device; after receiving the data packets from the first device, the second device may not immediately reply with an acknowledgment, but sequentially buffer the plurality of received data packets via the storage resource locally allocated to the first device; and the second device performs acknowledgment on the plurality of received data packets only after first preset duration is delayed or when buffer space that may be used in the storage resource to receive data reaches a preset buffer value. In this way, not only efficiency of sending a data packet by the first device can be improved, but also a quantity of times of sending an acknowledgment reply by the second device can be reduced, thereby reducing bandwidth consumption.

A specific example is used to provide description that the second device performs delay acknowledgment on the plurality of received data packets. It is assumed that the first device consecutively sends three data packets to the second device, and the three data packets are successively the data packet 1, a data packet 2, and a data packet 3. The data packet 1 carries the SDU 1, the sequence number field is used to carry "101", and the acknowledgment sequence number field is used to carry "200". The data packet 2 carries an SDU 2, a sequence number field is used to carry "102", and an acknowledgment sequence number field is used to carry "200". The data packet 3 carries an SDU 3, a sequence number field is used to carry "103", and an acknowledgment sequence number field is used to carry "200". In this case, the second device sends one response packet to the first device only after the second device consecutively receives the three data packets. A sequence number field of the response packet is used to carry "200", and an acknowledgment sequence number field is used to carry "103". In this way, the first device determines that the second device successfully receives the data packet 1, the data packet 2, and the data packet 3 if an acknowledgment sequence number carried in the response packet is a sending sequence number carried in the data packet 3.

### Phase 3: transmission end

S406: The first device sends a control packet 3 to the second device, where the control packet 3 includes transport control option information 3, and the transport control option information 3 is used to request to terminate the data transmission from the first device to the second device.

In this embodiment of this application, after the first device completes transmission of a last SDU, the first device may send the control packet 3 to the second device, to request to terminate the data transmission from the first device to the second device. This also means that the first device terminates data transmission to the second device.

The transport control option information 3 is carried in a transport control option field in a packet header of the control packet 3. For example, the transport control option information 3 may be represented by using a bit in the transport control option field or by using a binary value of the transport control option field. This is not specifically limited herein. It may be understood that the transport control option information 3 is equivalent to the foregoing control primitive indicating "end".

For example, in the control packet 3, it is assumed that a sending sequence number field is used to carry "111", and an acknowledgment sequence number field is still used to carry "200". If the sending sequence number carried in the data packet 1 is "101", it indicates that the first device has transmitted 10 SDUs to the second device.

For example, in the control packet 3, a source port field is used to carry the identifier of the first application, and a destination port field is used to carry the identifier of the second application.

In some possible embodiments, the transport control option information 3 may also be understood as being used to request to disconnect the first communication connection.

S407: The second device releases, based on the control packet 3, the configured resource used to receive the data from the first device.

In an implementation, after the configured resource used to receive the data from the first device is released, the resource is reclaimed. Therefore, when the first device subsequently sends the control packet 1 to the second device again, the second device needs to reconfigure a resource used to receive data from the first device. In this way, resource utilization can be improved.

In another implementation, releasing the configured resource used to receive the data from the first device may be understood as locally deleting a correspondence between the resource and the first device. When the first device subsequently sends the control packet 1 to the second device again, the second device may directly associate the resource with the first device. In this case, the resource is equivalent to a resource reserved by the second device for the first device.

S408: The second device sends a control packet 4 to the first device, where the control packet 4 includes transport control option information 4, and the transport control option information 4 is used to acknowledge termination of the data transmission from the first device to the second device.

Correspondingly, the first device receives the control packet 4 from the second device, and the first device may determine, based on the transport control option information 4 in the control packet 4, that the data transmission from the first device to the second device has been terminated, and a transmission period of the current data transmission of the first device ends.

The transport control option information 4 is carried in a transport control option field in a packet header of the control packet 4. For example, the transport control option information 4 may be represented by using a bit in the transport control option field or by using a binary value of the transport control option field. This is not specifically limited herein. It may be understood that the transport control option information 4 is equivalent to the foregoing control primitive indicating "end ack".

For example, if the sequence number field in the control packet 3 is used to carry "111" and the acknowledgment sequence number field is used to carry "200", in the control packet 4, a sequence number field is used to carry "200", and an acknowledgment sequence number field is used to carry "111".

For example, in the control packet 4, a source port field is used to carry the identifier of the second application, and a destination port field is used to carry the identifier of the first application.

In some possible embodiments, the transport control option information 4 may also be understood as being used to determine to disconnect the first communication connection.

In other words, the first device may start a transmission period of data transmission by sending a packet that carries a control primitive indicating "start". When the data transmission of the first device ends, the first device may end the transmission period by sending a packet that carries a control primitive indicating "end". In the transmission period, a communication connection established via the control primitive "start" is always kept alive. Compared with the conventional technology in which a probe packet needs to be periodically sent to keep an established communication connection alive, this application can effectively reduce bandwidth consumption, and can also reduce local electric energy consumption of a device.

In some possible embodiments, in any one of the three phases: the transmission start phase, the data transmission phase, and the transmission end phase, if any one of the first device and the second device detects a local fault event, the device may send a control packet 5 to a peer end, so that the peer end performs a reset operation. In addition, the device locally performs a reset operation on data transmission corresponding to a current transmission period. The control packet 5 includes transport control option information 5, and the transport control option information 5 is used to reset the data transmission from the first device to the second device. It may be understood that the transport control option information 5 is equivalent to the foregoing control primitive indicating "reset".

Herein, the local fault event includes at least one of a lower-layer protocol (for example, a network layer protocol or a data link layer protocol) disconnection event, a data transmission failure event, and the like.

For example, after the first device sends a data packet, if the first device does not receive a response packet for the data packet and a quantity of retransmissions of the data packet reaches a preset quantity of retransmissions, this case may be considered as a local fault event of the first device.

For example, after the first device receives the control packet 2 (or after the first communication connection is successfully established), if the first device does not send data within the first preset duration, this case may be considered as a local fault event of the first device.

For example, after the second device sends the control packet 2, if the second device does not receive data from the first device within the first preset duration, this case may be considered as a local fault event of the second device.

It can be learned that the foregoing embodiment shows a unidirectional (that is, from the first device to the second device) communication process, and it indicates that unidirectional data transmission may be controlled via the LWCTP header defined in embodiments of this application. In addition, compared with the conventional technology in which corresponding resources need to be locally configured at both communication ends respectively during unidirectional data transmission, in this embodiment of this application, only the corresponding resource needs to be locally configured or reserved by the second device during unidirectional data transmission, and the first device does not need to locally reserve a resource used to receive data from the second device. This reduces resource consumption of a sender.

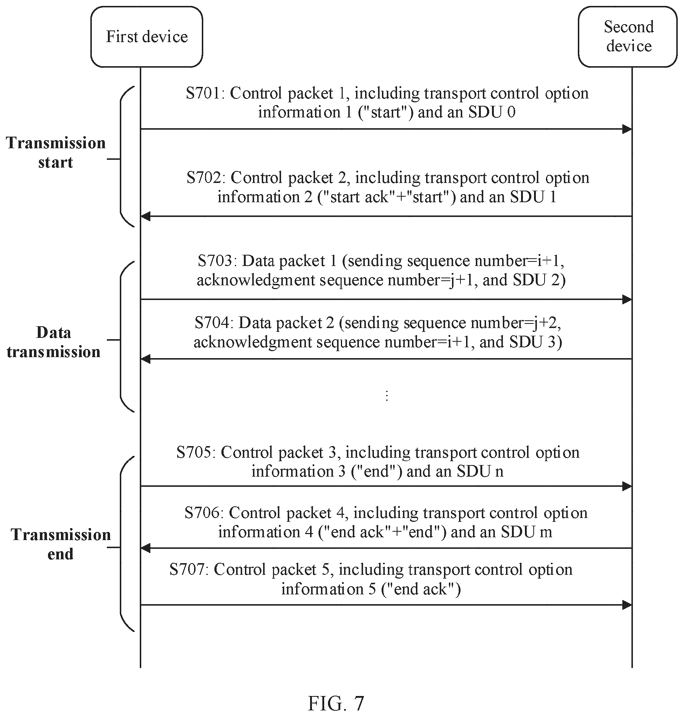

It may be understood that, if the second device has a requirement for sending data to the first device, the second device may start another transmission period in an opposite transmission direction (from the second device to the first device). For a specific process, refer to the related descriptions in the embodiment in FIG. 4 or refer to related descriptions of FIG. 7 in the following embodiment. Details are not described herein.

Based on the communication process shown in FIG. 4, the first device and the second device may locally manage and maintain local connection status information of the devices through state machines. The following separately describes the state machines configured on the first device and the second device.

First case: The first device is configured with a state machine 1 corresponding to the first communication connection.

The state machine 1 is configured to manage a connection status of the first device serving as a sender on the first communication connection.

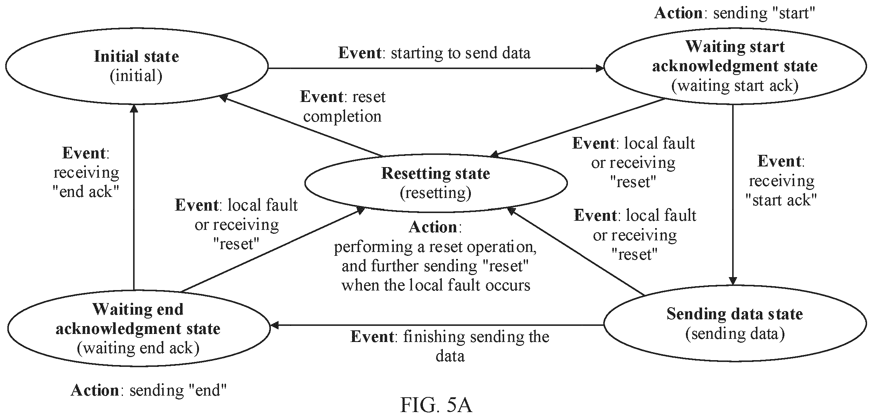

FIG. 5A is a diagram of states of a state machine configured on a sender according to an embodiment of this application. In FIG. 5A, the following five states are shown:
(1) Initial (initial) state indicates that the data transmission from the first device to the second device is not started, in other words, the first device does not request the second device to start the data transmission from the first device to the second device.
   In some possible embodiments, the initial state may alternatively indicate that the first communication connection is not established.
(2) Waiting start acknowledgment (waiting start ack) state indicates that the first device waits for the second device to reply with an acknowledgment of starting the data transmission from the first device to the second device. In some possible embodiments, the first device may be allowed to transmit data to the second device in the waiting start acknowledgment state.
   In some possible embodiments, the waiting start acknowledgment state may also indicate that the first device waits for the second device to reply with an acknowledgment of establishing the first communication connection.
(3) Sending data (sending data) state indicates that the first device learns that the data transmission from the first device to the second device has been successfully started. In this state, the first device may sequentially transmit the data to the second device.
(4) Waiting end acknowledgment (waiting end ack) state indicates that the first device waits for the second device to reply with an acknowledgment of terminating the data transmission from the first device to the second device.
   In some possible embodiments, the waiting end acknowledgment state may also indicate that the first device waits for the second device to reply with an acknowledgment of disconnecting the first communication connection.
(5) Resetting (resetting) state indicates that the first device resets the data transmission from the first device to the second device.

In some possible embodiments, the resetting state may also indicate that the first device resets the first communication connection.

Based on FIG. 5A, the state machine 1 is configured to:
1: when the first device is in the initial state, in response to an event of starting to send data, switch the first device from the initial state to the waiting start acknowledgment state, for the first device to perform an action of sending a packet (for example, the control packet 1 in FIG. 4) that carries a control primitive indicating "start", where
   the event of starting to send data means that the first device has a requirement for transmitting data to the second device;
2: when the first device is in the waiting start acknowledgment state, in response to an event of receiving a packet (for example, the control packet 2 in FIG. 4) that carries a control primitive indicating "start ack", switch the first device from the waiting start acknowledgment state to the sending data state;
3: when the first device is in the sending data state, in response to an event of finishing sending the data, switch the first device from the sending data state to the waiting end acknowledgment state, for the first device to perform an action of sending a packet (for example, the control packet 3 in FIG. 4) that carries a control primitive indicating "end", where
   the event of finishing sending the data means that the first device completes transmission of a last piece of data and the first device no longer sends data to the second device in a current transmission period;
4: when the first device is in the waiting end acknowledgment state, in response to an event of receiving a packet (for example, the control packet 4 in FIG. 4) that carries a control primitive indicating "end ack", switch the first device from the waiting end acknowledgment state to the initial state;
5: when the first device is in any one of the waiting start acknowledgment state, the sending data state, and the waiting end acknowledgment state shown in FIG. 5A, in response to a local fault event or an event of receiving a packet that is sent by the second device and that carries a control primitive indicating "reset", switch the first device to a resetting state, for the first device to perform a reset operation, and for the first device to further perform, when a local fault occurs, an action of sending, to the second device, a packet that carries the control primitive indicating "reset", where
   the local fault event includes at least one of the lower-layer protocol (for example, the network layer protocol or the data link layer protocol) disconnection event, the data transmission failure event, and the like; and for the local fault event, refer to the descriptions of the corresponding content in S408 in FIG. 4, and details are not described herein again; and
6: when the first device is in the resetting state, in response to a reset completion event, switch the first device from the resetting state to the initial state, where
   the reset completion event means that the first device has locally completed the reset operation.

Second case: The second device is configured with a state machine 2 corresponding to the first communication connection.

The state machine 2 is configured to manage a connection status of the second device serving as a receiver on the first communication connection.

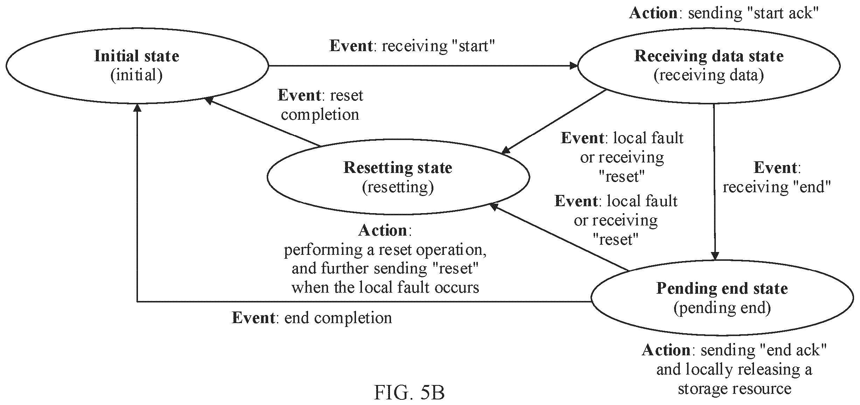

FIG. 5B is a diagram of states of a state machine configured on a receiver according to an embodiment of this application. In FIG. 5B, the following four states are shown:
(1) Initial (initial) state indicates that the second device does not start the data transmission from the first device to the second device.
   In some possible embodiments, the initial state may also indicate that the second device has not established the first communication connection.
(2) Receiving data (receiving data) state indicates that the second device completes configuration of the resource used to receive the data from the first device and waits to receive data transmitted by the first device.
(3) Pending end (pending end) state indicates that the second device releases the resource that is configured by the second device and that is used to receive the data from the first device, that is, the second device stops receiving the data from the first device.
(4) Resetting (resetting) state indicates that the second device resets the data transmission from the first device to the second device.

In some possible embodiments, the resetting state may also indicate that the second device resets the first communication connection.

Based on FIG. 5B, the state machine 2 is configured to:
1: when the second device is in the initial state, in response to an event of receiving the packet (for example, the control packet 1 in FIG. 4) that carries the control primitive indicating "start", switch the second device from the initial state to the receiving data state, for the second device to perform an action of sending the packet (for example, the control packet 2 in FIG. 4) that carries the control primitive indicating "start ack";
2: when the second device is in the receiving data state, in response to an event of receiving the packet (for example, the control packet 3 in FIG. 4) that carries the control primitive indicating "end", switch the second device from the receiving data state to the pending end state, for the second device to perform an action of sending the packet (for example, the control packet 4 in FIG. 4) that carries the control primitive indicating "end ack" and an action of releasing the resource that is configured by the second device and that is used to receive the data from the first device;
3: when the second device is in the pending end state, in response to an end completion event, switch the second device from the pending end state to the initial state, where
   the end completion event means that the second device finishing releasing the configured resource used to receive the data from the first device;
4: when the second device is in the receiving data state or the pending end state shown in FIG. 5B, in response to a local fault event or an event of receiving the packet that is sent by the first device and that carries the control primitive indicating "reset", switch the second device to the resetting state, for the second device to perform a reset operation, and for the second device to further perform, when a local fault occurs, an action of sending, to the first device, the packet that carries the control primitive indicating "reset", where for the local fault event, refer to the descriptions of the corresponding content in S408 in FIG. 4, and details are not described herein again; and
5: when the second device is in the resetting state, in response to a reset completion event, switch the second device from the resetting state to the initial state, where
   the reset completion event means that the second device has locally completed the reset operation.

It may be understood that the state machine 1 and the state machine 2 are state machines corresponding to the first communication connection. In some possible embodiments, in a process in which the second device requests the first device to start data transmission from the second device to the first device, the second device further needs to maintain a state machine 3. The state machine 3 is generated by the second device as a data sender. For configuration of the state machine 3, refer to the related descriptions of the state machine 1. Correspondingly, the first device further needs to maintain a state machine 4. The state machine 4 is generated by the first device as a data receiver. For configuration of the state machine 4, refer to the related descriptions of the state machine 2.

It can be learned that two communication parties only need to separately maintain respective connection statuses in the transmission period. For example, when unidirectional data transmission is started, a device only needs to manage connection status information when the device serves as a data sender or a data receiver. When bidirectional data transmission is started, two independent state machines (a state machine in a case in which the first device serves as a data sender and a state machine in a case in which the first device serves as a data receiver) are configured on the first device, so that management of a connection status in a case in which a same device serves as a sender and management of a connection status in a case in which the device serves as a receiver are independently decoupled. This can effectively simplify management of the device on the communication connection status.

It can be learned from the embodiment in FIG. 4 that, although the first device can transmit data without sending a response packet for the control packet 2 to the second device, the first device starts data transmission only after receiving the control packet 2 sent by the second device. In some possible embodiments, to improve data transmission efficiency, the first device may transmit data to the second device as early as possible without waiting for receiving the control packet 2.

Specifically, the first device may start to transmit data to the second device in a connection establishment phase shown in FIG. 4.

For example, in FIG. 4, after the first device sends the control packet 1 and before the first device receives the control packet 2 from the second device, the first device may send the data packet 1. In other words, S404 in FIG. 4 may be performed after S401 and before S403.

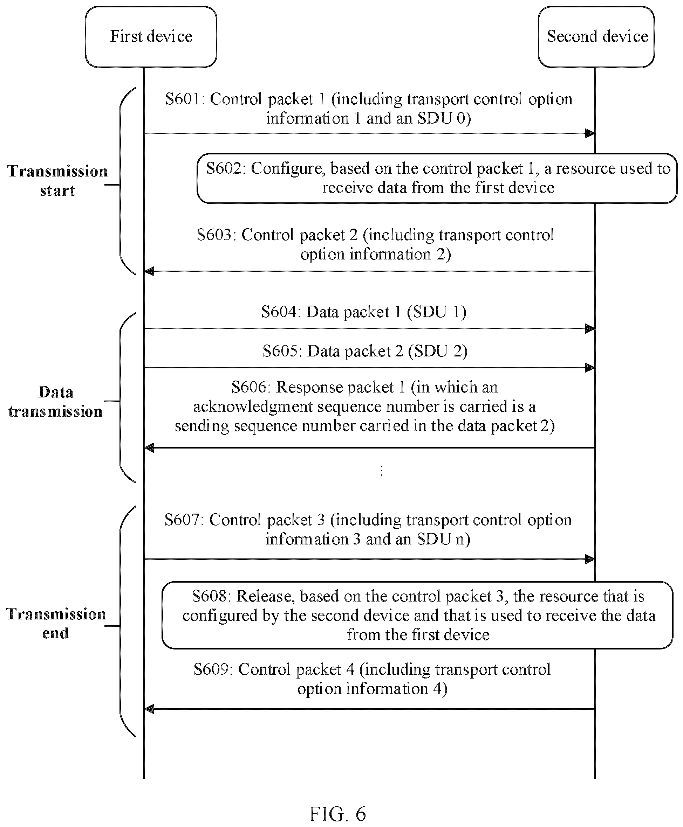

For example, in FIG. 4, the first device may alternatively directly include to-be-sent data via the control packet 1. In other words, in this embodiment of this application, in addition to transport control option information (for example, the transport control option information 1), a control packet may further carry data. For details of this embodiment, refer to related descriptions of an embodiment in FIG. 6.

FIG. 6 is another communication method according to an embodiment of this application. A difference between the embodiment shown in FIG. 6 and the embodiment shown in FIG. 4 lies in that an occasion on which a first device transmits data in FIG. 6 is earlier than an occasion on which the first device transmits the data in FIG. 4. In the embodiment in FIG. 6, an example in which the data transmitted by the first device to a second device is an SDU is used. The method includes but is not limited to the following steps.

S601: The first device sends a control packet 1 to the second device, where the control packet 1 includes transport control option information 1 and an SDU 0.

The transport control option information 1 is used to request to start data transmission from the first device to the second device. For descriptions of the transport control option information 1, refer to the related descriptions of the transport control option information 1 in S401 in FIG. 4.

Herein, the SDU 0 is a first piece of service data from the first device. The SDU 0 is carried in a payload field in a packet header of the control packet 1.

S602: The second device configures, based on the control packet 1, a resource used to receive the data from the first device.

S603: The second device sends a control packet 2 to the first device, where the control packet 2 includes transport control option information 2. For details of this step, refer to the related descriptions of S403 in FIG. 4.

The transport control option information 2 is used to acknowledge start of the data transmission from the first device to the second device.

It may be understood that the control packet 2 is not only an acknowledgment reply to the transport control option information 1 in the control packet 1, but also an acknowledgment reply to the SDU 0 in the control packet 1.

S604: The first device sends a data packet 1 to the second device, where the data packet 1 carries an SDU 1.

S605: The first device sends a data packet 2 to the second device, where the data packet 2 carries an SDU 2.

S606: The second device sends a response packet 1 to the first device, where an acknowledgment sequence number carried in the response packet 1 is a sending sequence number carried in the data packet 2.

It can be learned from S604 to S606 that the first device may consecutively send, to the second device, the data packets that carry the SDUs. In this way, a throughput in a case in which a sender sends data in batches can be improved. It may be understood that S604 to S606 are merely an example of a scenario of data transmission between the first device and the second device. The second device is not limited to sending an acknowledgment reply each time the second device receives two SDUs, and the first device is not limited to sending only two SDUs to the second device in a data transmission phase.

In some possible embodiments, a transmission failure may occur when the first device sends the data packet 2 to the second device in S605. For example, after the first device consecutively sends the data packet 1 and the data packet 2 to the second device, the first device receives the response packet 1 from the second device. If the acknowledgment sequence number carried in the response packet 1 is a sending sequence number carried in the data packet 1, the first device determines that the data packet 2 is not successfully received by the second device. In this case, the first device needs to resend the data packet 2. It may be understood that, when a packet is retransmitted, a sending sequence number carried in the packet remains unchanged.

For example, to reduce a quantity of invalid retransmissions and reduce bandwidth consumption, a time interval at which the first device retransmits the data packet 2 meets an exponential backoff principle.

Further, in consideration of transmission reliability, after the first device consecutively sends the data packet 1 and the data packet 2 to the second device, the first device determines that the data packet 2 fails to be transmitted only when acknowledgment sequence numbers carried in response packets received by the first device from the second device for two consecutive times are all the sending sequence number carried in the data packet 1.

In some possible embodiments, after the first device consecutively sends the data packet 1 and the data packet 2 to the second device, if the response packet 1 is not received from the second device within preset duration, the first device may resend the data packet 1 and the data packet 2 to the second device.

In some possible embodiments, a manner in which the second device performs an acknowledgment reply to a data packet sent by the first device may alternatively be that each time the second device receives a data packet sent by the first device, the second device performs an acknowledgment reply to the packet. For example, after the first device sends the data packet 1 to the second device, the second device sends a response packet for the data packet 1 to the first device; and after the first device sends the data packet 2 to the second device, the second device sends a response packet for the data packet 2 to the first device.

Further, in the foregoing scenario, after the second device receives the data packet 2, the response packet that is for the data packet 2 and that is sent by the second device to the first device may not be successfully received by the first device. As a result, the first device resends the data packet 2. In this case, the second device receives the data packet 2 for the second time, that is, receives a repeated packet. In this case, the second device may discard the data packet 2 received for the second time, and send the response packet for the data packet 2 to the first device again.

S607: The first device sends a control packet 3 to the second device, where the control packet 3 includes transport control option information 3 and an SDU n.

The transport control option information 3 is used to request to terminate the data transmission from the first device to the second device.

The SDU n is a last piece of service data to be sent by the first device. It can be learned that, in the embodiment in FIG. 6, the first device transmits (n+1) SDUs to the second device.

S608: The second device releases, based on the control packet 3, the resource that is configured by the second device and that is used to receive the data from the first device.

S609: The second device sends a control packet 4 to the first device, where the control packet 4 includes transport control option information 4. For details of this step, refer to the related descriptions of S408 in FIG. 4. Details are not described herein again.

It can be learned from FIG. 6 that, in addition to the data transmission phase, the first device may also include data in a sent packet in a transmission start phase and a transmission end phase. Therefore, if the first device needs to send (n+1) pieces of data to the second device in an entire transmission period, the first device needs to send only (n+1) packets to the second device, and each packet carries one piece of data. It is required in the conventional technology that data can be sent only after a connection is established. Therefore, in the conventional technology, if a first device needs to send (n+1) pieces of data to a second device, the first device needs to send (n+5) packets in total to the second device, where the first two packets are used to establish a connection, each packet in the intermediate (n+1) packets is used to carry one piece of data, and the last two packets are used to disconnect the connection. It can be learned from this that, in this embodiment of this application, data transmission can be started in a connection establishment phase. In this way, a delay of the first piece of service data can be reduced, bandwidth consumption can be effectively reduced, and data transmission efficiency can be improved. Especially in a short connection process, the advantage of reducing bandwidth consumption is more obvious.

FIG. 7 is a flowchart of another communication method according to an embodiment of this application. A difference between the embodiment in FIG. 7 and the embodiment in FIG. 6 lies in that bidirectional data transmission between a first device and a second device can be implemented in the embodiment in FIG. 7. In the embodiment in FIG. 7, an example in which data transmitted between the first device and the second device is an SDU is used. It should be noted that a packet header in the embodiment in FIG. 7 is the foregoing defined packet header used for the transport layer, for example, the LWCTP header. The method includes but is not limited to the following steps.

S701: The first device sends a control packet 1 to the second device, where the control packet 1 includes transport control option information 1 and an SDU 0.

The transport control option information 1 is used to request to start data transmission from the first device to the second device.

The transport control option information 1 is carried in a transport control option field in a packet header of the control packet 1. The transport control option information 1 is equivalent to the foregoing control primitive indicating "start". For descriptions of the transport control option information 1, refer to the related descriptions of the transport control option information 1 in S401 in FIG. 4.

Herein, the SDU 0 is a first piece of service data sent by the first device. The SDU 0 is carried in a payload field in the packet header of the control packet 1.

Correspondingly, the second device receives the control packet 1 from the first device, and the second device may configure, based on the transport control option information 1 in the control packet 1, a resource used to receive data from the first device.

S702: The second device sends a control packet 2 to the first device, where the control packet 2 includes transport control option information 2 and an SDU 1.

Different from the transport control option information 2 in FIG. 4 and FIG. 6, the transport control option information 2 in FIG. 7 is not only used to acknowledge start of the data transmission from the first device to the second device, but also used to request to start data transmission from the second device to the first device. In some possible embodiments, the transport control option information 2 may also be understood as being further used to request to establish a second communication connection for transmitting data from the second device to the first device. It may be understood that the second communication connection is a unidirectional communication connection. It may be understood that the data transmission from the second device to the first device is performed based on the second communication connection.

The transport control option information 2 is carried in a transport control option field in a packet header of the control packet 2. The transport control option information 2 is equivalent to the foregoing control primitives indicating "start ack" and "start".

Herein, the SDU 1 is a first piece of service data sent by the second device. The SDU 1 is carried in a payload field in the packet header of the control packet 2.

Correspondingly, the first device receives the control packet 2 from the second device, and the first device configures, based on the transport control option information 2 in the control packet 2, a resource used to receive data from the second device.

S703: The first device sends a data packet 1 to the second device, where the data packet 1 carries an SDU 2.

For example, it is assumed that a sending sequence number carried in the control packet 1 is i and an acknowledgment sequence number carried in the control packet 1 is j. In this case, according to the change rule of the sending sequence number and the acknowledgment sequence number described in FIG. 2, it can be learned that a sending sequence number carried in the control packet 2 is j+1 and an acknowledgment sequence number carried in the control packet 2 is i, and a sending sequence number carried in the data packet 1 is i+1 and an acknowledgment sequence number carried in the data packet 1 is j+1. Based on the acknowledgment sequence number carried in the data packet 1, it can be learned that the first device successfully receives the control packet 2.

S704: The second device sends a data packet 2 to the first device, where the data packet 2 carries an SDU 3.

For example, if the sending sequence number carried in the data packet 1 is i+1 and the acknowledgment sequence number carried in the data packet 1 is j+1, a sending sequence number carried in the data packet 2 is j+2 and an acknowledgment sequence number carried in the data packet 2 is i+1. It can be learned that the data packet 2 carries the data SDU 3, and the data packet 2 combines an acknowledgment reply to the data packet 1 and a packet used to transmit data. In this way, efficiency of data transmission between the first device and the second device can be improved.

In some possible embodiments, the second device may not combine the acknowledgment reply to the data packet 1 and the packet used to transmit data. For example, after the second device receives the data packet 1 from the first device, the second device first sends a response packet for the data packet 1 to the first device. When the second device needs to transmit data to the first device, the second device sends, to the first device based on the established second communication connection, a data packet that carries the data.

In some possible embodiments, the second device may alternatively delay an acknowledgment reply to a data packet sent by the first device. For example, when the second device meets any one of the following conditions, the second device may perform an acknowledgment reply to a plurality of data packets received from the first device: First preset duration is delayed, buffer space that is in the locally configured resource and that may be used to receive data from the first device reaches a preset buffer value, or the second device needs to transmit data to the first device. For an example in which the second device delays acknowledgment of the data packet from the first device, refer to the descriptions of the corresponding content in S405 in the embodiment in FIG. 4. Details are not described herein again.

Herein, S703 and S704 are an example of a communication scenario in which the bidirectional data transmission between the first device and the second device is started. Interaction of only one data transmission between the first device and the second device is not limited in embodiments of this application. In some possible embodiments, after the bidirectional data transmission between the first device and the second device is started, only the first device may transmit data to the second device, or only the second device may transmit data to the first device, or the first device and the second device may alternatively transmit data to peer ends. This is not specifically limited herein.

In some possible embodiments, when the first device completes data transmission and the second device also completes data transmission, the following S705 to S707 may be further performed.

S705: The first device sends a control packet 3 to the second device, where the data packet 3 includes transport control option information 3 and an SDU n.

The transport control option information 3 is used to request to terminate the data transmission from the first device to the second device.

The transport control option information 3 is carried in a transport control option field in a packet header of the control packet 3. The transport control option information 3 is equivalent to the foregoing control primitive indicating "end".

Herein, the SDU n is a last piece of service data sent by the first device. The SDU n is carried in a payload field in the packet header of the control packet 3.

Correspondingly, the second device receives the control packet 3 from the first device, and the second device releases, based on the transport control option information 3 in the control packet 3, the resource that is configured by the second device and that is used to receive the data from the first device.

S706: The second device sends a control packet 4 to the first device, where the control packet 4 includes transport control option information 4 and an SDU m.

Different from the transport control option information 4 in FIG. 4 and FIG. 6, the transport control option information 4 in FIG. 7 is not only used to acknowledge termination of the data transmission from the first device to the second device, but also used to request to terminate the data transmission from the second device to the first device. In some possible embodiments, the transport control option information 4 may also be understood as being further used to request to disconnect the second communication connection.

The transport control option information 4 is carried in a transport control option field in a packet header of the control packet 4. The transport control option information 4 is equivalent to the foregoing control primitives indicating "end ack" and "end".

Herein, the SDU m is a last piece of service data sent by the second device. The SDU m is carried in a payload field in the packet header of the control packet 2.

Correspondingly, the first device receives the control packet 4 from the second device, the first device releases, based on the transport control option information 4 in the control packet 4, the resource that is configured by the first device and that is used to receive the data from the second device, and the first device further determines, based on the transport control option information 4, that the data transmission from the first device to the second device has ended.

S707: The first device sends a control packet 5 to the second device, where the control packet 5 includes transport control option information 5.

The transport control option information 5 is used to acknowledge termination of the data transmission from the second device to the first device. In some possible embodiments, the transport control option information 5 may also be understood as being further used to acknowledge disconnection of the second communication connection.

The transport control option information 5 is carried in a transport control option field in a packet header of the control packet 5. The transport control option information 5 is equivalent to the foregoing control primitive indicating "end ack".

Correspondingly, after the second device receives the control packet 5 from the first device, the second device determines that the data transmission from the second device to the first device has been terminated.

In some possible embodiments, data transmission on a first device side may end but data transmission on a second device side does not end. In this case, the first device may first request the second device to terminate the data transmission from the first device to the second device, and the second device continues to transmit data to the first device based on the second communication connection. In some possible embodiments, data transmission on a first device side may not end but data transmission on a second device side ends. In this case, the second device may first request the first device to terminate the data transmission from the second device to the first device, and the first device continues to transmit data to the second device based on a first communication connection.

It can be learned that, in this embodiment of this application, bidirectional communication between the first device and the second device can be implemented, and control on two transmission directions corresponding to the bidirectional communication is independently decoupled. This helps ensure transmission reliability. In addition, the first device side or the second device side transmits data in a transmission start phase, so that a transmission delay of a first piece of local service data can be effectively reduced, and data transmission efficiency is improved.

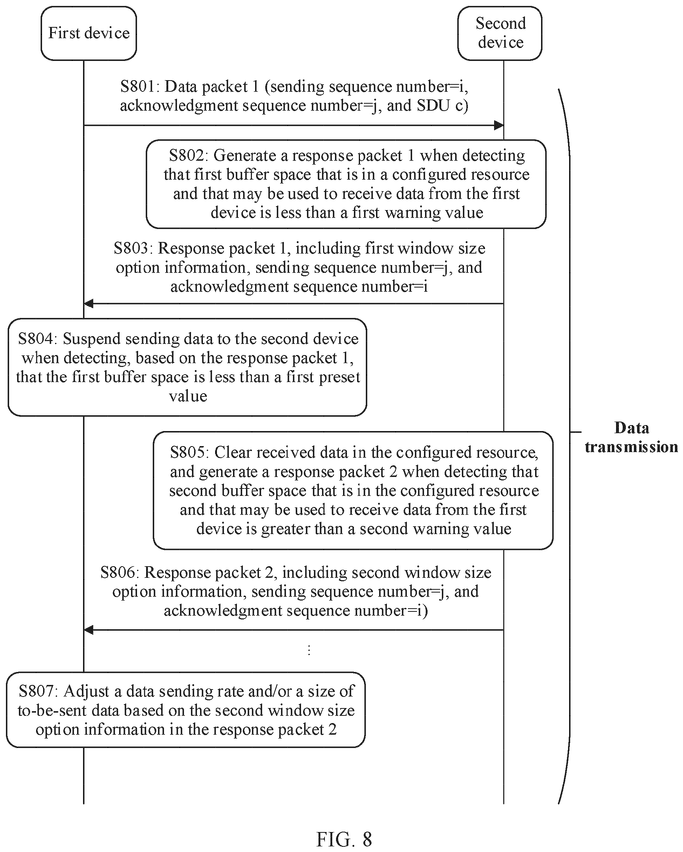

FIG. 8 is a flowchart of another communication method according to an embodiment of this application. The embodiment in FIG. 8 mainly provides description that in a data transmission phase (that is, a connection is established between two communication parties by default or bidirectional data transmission is started), a receiver (for example, the second device in FIG. 1) may include the window size option information in FIG. 3B in a packet, so that a sender (for example, the first device in FIG. 1) adaptively adjusts a data transmission rate and/or a size of to-be-sent data. It should be noted that a packet header in the embodiment in FIG. 8 is the foregoing defined packet header used for the transport layer, for example, the LWCTP header. The method includes but is not limited to the following steps.

S801: A first device sends a data packet 1 to a second device.

For example, in the data packet 1, a payload field carries data SDU c, a sequence number field carries a sending sequence number i, and an acknowledgment sequence number field carries an acknowledgment sequence number j. Herein, the payload field, the sequence number field, and the acknowledgment sequence number field are all included in a packet header of the data packet 1.

S802: The second device generates a response packet 1 when detecting that first buffer space that is in a configured resource and that may be used to receive data from the first device is less than a first warning value.

Herein, the first warning value may be preset by a user on the second device.

The response packet 1 includes first window size option information, and the first window size option information is used to carry the first buffer space. The first window size option information is carried in a window size option field in a packet header of the response packet 1.

For example, if the sending sequence number carried in the data packet 1 is i and the acknowledgment sequence number is j, a sending sequence number carried in the response packet 1 is j and an acknowledgment sequence number carried in the response packet 1 is i. In some possible embodiments, the response packet 1 may also carry data on a second device side, and the sending sequence number carried in the response packet 1 is j+1.

S803: The second device sends the response packet 1 to the first device.

In some possible embodiments, to improve transmission reliability, the response packet 1 may be retransmitted by the second device for a plurality of times. In a retransmission process, the sending sequence number carried in the response packet 1 remains unchanged.

S804: The first device suspends sending data to the second device when detecting, based on the response packet 1, that the first buffer space is less than a first preset value.

Herein, the first preset value may be preset by the user on the first device. The first preset value is less than the first warning value.

For example, the first buffer space may be 0.

In this way, the first device obtains the first buffer space from the first window size option information in the response packet 1. When the first buffer space is less than the first preset value, it indicates that available buffer space in the storage resource locally allocated by the second device to the first device is insufficient. Therefore, the first device may first suspend data transmission to the second device.

S805: The second device clears received data in the configured resource, and generates a response packet 2 when detecting that second buffer space that is in the configured resource and that may be used to receive data from the first device is greater than a second warning value.

Herein, the second warning value may be preset by the user on the second device. The second warning value is greater than or equal to the first warning value.

In other words, the second device may perform at least one clear operation on the received data in the configured resource, and buffer space that is in the resource and that may be used to receive data from the first device is increased from the first buffer space to the second buffer space. When the second buffer space is greater than the second warning value, the second device may notify, via the response packet 2, the first device of the buffer space that is currently used to receive data from the first device by the second device.

The response packet 2 includes second window size option information, and the second window size option information is used to carry the second buffer space. The second window size option information is carried in a window size option field in a packet header of the response packet 2.

For example, if the sending sequence number carried in the response packet 1 is j and the acknowledgment sequence number is i, a sending sequence number carried in the response packet 2 is j and an acknowledgment sequence number carried in the response packet 2 is i. In some possible embodiments, the response packet 2 may also carry data on the second device side, and the sending sequence number carried in the response packet 2 is j+1.

S806: The second device sends the response packet 2 to the first device.

In some possible embodiments, to improve transmission reliability, the second device may send the response packet 2 to the first device for a plurality of times.

In some possible embodiments, in a process in which the second device sends the response packet 2 to the first device for the plurality of times, the second buffer space carried in the second window size option information in the response packet 2 may change.

In some possible embodiments, when data transmission from the second device to the first device is started, although data transmission from the first device to the second device is suspended, the second device may transmit data to the first device. To be specific, the response packet 2 sent by the second device to the first device may further carry the data on the second device side, and the sending sequence number carried in the response packet 2 is greater than or equal to the sending sequence number carried in the response packet 1.

Correspondingly, the first device receives the response packet 2 from the second device. When the sending sequence number carried in the response packet 2 is greater than or equal to the sending sequence number carried in the response packet 1, the first device determines, based on the second window size option information in the response packet 2, that the second buffer space is greater than the first preset value, and the first device continues to send data to the second device.

S807: The first device adjusts a data sending rate and/or a size of to-be-sent data based on the second window size option information in the response packet 2.

In an implementation, when the second buffer space carried in the second window size option information is less than a second preset value, the data sending rate is reduced and/or the size of the to-be-sent data is reduced.

Herein, the second preset value may be preset by the user on the first device. The second preset value is greater than the first preset value, and the second preset value is less than or equal to the first warning value locally set by the second device.

It can be learned that when the second buffer space is small, the first device may reduce the data sending rate and/or reduce a size of data sent each time, so that the second device can clear, within specific duration, the received data in the configured resource, to increase buffer space that is in the resource and that may be used to receive data from the first device. This helps improve transmission reliability and reduce a packet loss.

In another implementation, when the second buffer space carried in the second window size option information is greater than a third preset value, the data sending rate is increased and/or the size of the to-be-sent data is increased.

Herein, the third preset value may be preset by the user on the first device. The third preset value is greater than or equal to the second preset value, and the third preset value is less than or equal to the second warning value locally set by the second device.

In other words, when the second buffer space is sufficient or has a margin, the first device may increase the data sending rate of the first device and/or a size of data sent each time. **In** this way, data transmission efficiency is improved.

It can be learned that, the embodiment in FIG. 8 shows that the second device may include the window size option information in the packet, so that the first device serving as a data sender adaptively adjusts the data transmission rate and/or the size of the to-be-sent data. **In** some possible embodiments, when the data transmission from the second device to the first device is started, the first device may also include window size option information in a packet, so that the second device serving as a data sender adaptively adjusts a data transmission rate and/or a size of to-be-sent data.

It can be learned that, in this embodiment of this application, in the data transmission phase, the data receiver may include the window size option information in the packet, so that the data sender adaptively adjusts the data transmission rate and/or the size of the to-be-sent data. This helps improve data transmission efficiency and transmission reliability.

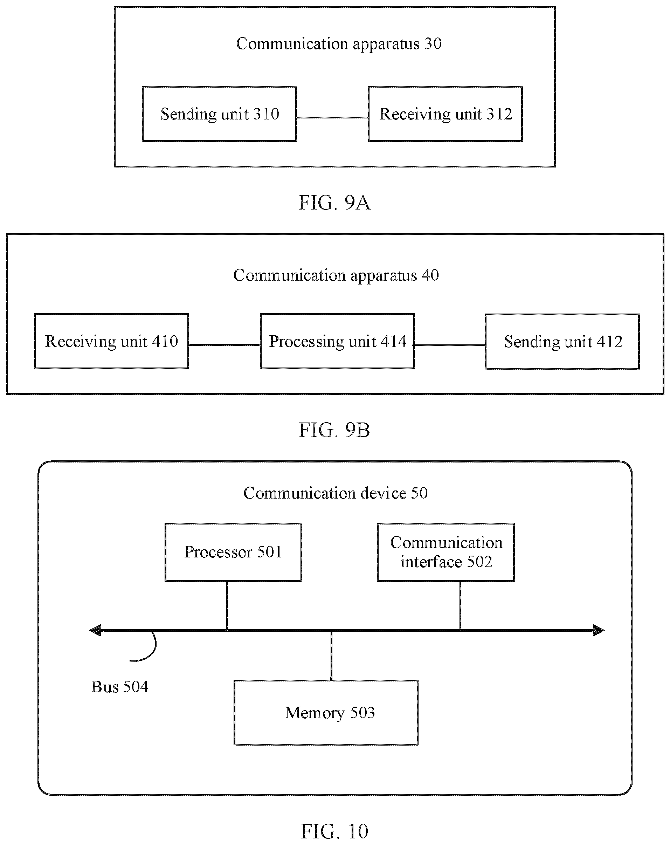

FIG. 9A is a diagram of a structure of a communication apparatus according to an embodiment of this application. A communication apparatus 30 includes a sending unit 310 and a receiving unit 312. The apparatus 30 may be implemented by hardware, software, or a combination of software and hardware.

For example, the communication apparatus 30 may be the first device or the communication apparatus 30 is included in the first device.

The sending unit 310 is configured to send a first control packet to a second device, where the first control packet includes first transport control option information, and the first transport control option information is used to request to start data transmission from the first device to the second device. The receiving unit 312 is configured to receive a second control packet from the second device, where the second control packet includes second transport control option information, and the second transport control option information is used to acknowledge start of the data transmission from the first device to the second device. The sending unit 310 is further configured to send first data to the second device when a response packet for the second control packet is not sent to the second device.

The communication apparatus 30 may be configured to implement the method on the first device side described in the embodiment in FIG. 4. In the embodiment in FIG. 4, the sending unit 310 may be configured to perform S401, S404, and S406, and the receiving unit 312 may be configured to perform S403, S405, and S408.

In some possible embodiments, the communication apparatus 30 may be further configured to implement the methods on the first device side described in FIG. 6, FIG. 7, and FIG. 8. For brevity of the specification, details are not described herein again.

FIG. 9B is a diagram of a structure of a communication apparatus according to an embodiment of this application. A communication apparatus 40 includes a receiving unit 410, a sending unit 412, and a processing unit 414. The communication apparatus 40 may be implemented by hardware, software, or a combination of software and hardware.

For example, the communication apparatus 40 may be the second device or the communication apparatus 40 is included in the second device.

The receiving unit 410 is configured to receive a first control packet from a first device, where the first control packet includes first transport control option information, and the first transport control option information is used to request to start data transmission from the first device to the second device. The processing unit 414 is configured to configure a resource used to receive data from the first device. The sending unit 412 is configured to send a second control packet to the first device, where the second control packet includes second transport control option information, and the second transport control option information is used to acknowledge start of the data transmission from the first device to the second device. The receiving unit 410 is further configured to receive first data from the first device when a response packet for the second control packet is not received from the first device.

In some possible embodiments, the communication apparatus 40 may further include the processing unit (not shown in the figure). The processing unit may be configured to locally allocate, to the first device, a storage resource used to receive data, and the like. The communication apparatus 40 may be configured to implement the method on the second device side described in the embodiment in FIG. 4. In the embodiment in FIG. 4, the receiving unit 410 may be configured to perform S401, S404, and S406, the processing unit may be configured to perform S402 and S407, and the sending unit 412 may be configured to perform S403, S405, and S408.

In some possible embodiments, the communication apparatus 40 may be further configured to implement the methods on the second device side described in FIG. 6, FIG. 7, and FIG. 8. For brevity of the specification, details are not described herein again.

Optionally, the communication apparatus shown in FIG. 9A or FIG. 9B may be an independent device, for example, a node, or may be a component, for example, a chip or an integrated circuit, in an independent device (for example, a node).

It should be understood that division into the units in the embodiment shown in FIG. 9A or FIG. 9B is merely logical function division. In actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, such as a central processing unit (central processing unit, CPU) or a microprocessor, and the memory is a memory in the apparatus or a memory outside the apparatus. Alternatively, the unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, or a CPU and an NPU.

FIG. 10 is a diagram of a structure of a communication device according to an embodiment of this application. As shown in FIG. 10, a communication device 50 includes a processor 501, a communication interface 502, a memory 503, and a bus 504. The processor 501, the memory 503, and the communication interface 502 communicate with each other through the bus 504.

It should be understood that quantities of processors and memories in the communication device 50 are not limited in this application.

In an implementation, the communication device 50 may be an electronic device having a communication capability. For example, the communication device 50 may be a handheld terminal, a vehicle, a vehicle-mounted device, a network side device, user equipment, an access terminal, a subscriber unit, a subscriber station, a mobile station, a remote station, a remote terminal, a wireless communication device, a user agent, or a user apparatus. Alternatively, the communication device 50 may be any possible smart terminal device (for example, a mobile phone), smart transportation device (for example, a vehicle or an uncrewed aerial vehicle), smart manufacturing device, smart home device (for example, a large screen or a speaker), or the like. Alternatively, the communication device 50 may be a component that is used in the foregoing electronic device and that can implement the foregoing method. The component may be, for example, an integrated circuit, a line card, or a chip. For example, the communication device 50 may be the first device or the second device in FIG. 1.

The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 8. However, it does not mean that there is only one bus or only one type of bus. The bus 504 may include a path for transmitting information between components (for example, the memory 503, the processor 501, and the communication interface 502) of the communication device 50.

For the processor 501, refer to the related descriptions of the processor in the foregoing embodiment. Details are not described herein again.

The memory 503 is configured to provide storage space, and the storage space may store data such as an operating system and a computer program. The memory 503 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 503 may exist independently, or may be integrated into the processor 501.

The communication interface 502 may be configured to provide information input or output for the processor 501. Alternatively, the communication interface 502 may be configured to receive data sent from the outside and/or send data to the outside. The communication interface 502 may be a wireless link interface, for example, an air interface, a cellular network interface, or a wireless local area network interface, or may be a wired link interface including an Ethernet cable, or may include a transmitter (for example, a radio frequency transmitter or an antenna), a receiver, or the like coupled to the interface. For example, when the communication interface 502 is a wireless link interface, the communication interface 502 may be configured to receive and send information based on one or more other types of wireless communication (for example, protocols). The wireless communication is, for example, Bluetooth, an IEEE 802.11 communication protocol, a cellular technology, worldwide interoperability for microwave access (worldwide interoperability for microwave access, WiMAX), long term evolution (Long Term Evolution, LTE), a ZigBee protocol, dedicated short range communication (dedicated short range communication, DSRC), and radio frequency identification (radio frequency identification, RFID) communication.

The processor 501 in the communication device 50 is configured to read the computer program stored in the memory 503, to perform the foregoing method, for example, the method described in FIG. 4.

In a possible design manner, the communication device 50 may be one or more modules in an execution body (the first device) for performing the method shown in FIG. 4. The processor 501 may be configured to read one or more computer programs stored in the memory, to perform the following operations:
sending a first control packet to the second device through a sending unit 310, where the first control packet includes first transport control option information, and the first transport control option information is used to request to start data transmission from the first device to the second device;
receiving a second control packet from the second device through a receiving unit 312, where the second control packet includes second transport control option information, and the second transport control option information is used to acknowledge start of the data transmission from the first device to the second device; and
sending first data to the second device through the sending unit 310 when a response packet for the second control packet is not sent to the second device.

In a possible design manner, the communication device 50 may be one or more modules in an execution body (the second device) for performing the method shown in FIG. 4. The processor 501 may be configured to read one or more computer programs stored in the memory, to perform the following operations:
receiving a first control packet from the first device through a receiving unit 410, where the first control packet includes first transport control option information, and the first transport control option information is used to request to start data transmission from the first device to the second device;
configuring a resource used to receive data from the first device;
sending a second control packet to the first device through a sending unit 412, where the second control packet includes second transport control option information, and the second transport control option information is used to acknowledge start of the data transmission from the first device to the second device; and
receiving first data from the first device through the receiving unit 410 when a response packet for the second control packet is not received from the first device.

An embodiment of this application further provides a communication system. The communication system includes a first apparatus and a second apparatus. The first apparatus may be the communication apparatus 30 shown in FIG. 9A or the communication device 50 shown in FIG. 10. The second apparatus may be the communication apparatus 40 shown in FIG. 9B or the communication device 50 shown in FIG. 10. The first apparatus may be configured to perform the method on the first device side described in any one of the embodiments in FIG. 4, FIG. 6, FIG. 7, and FIG. 8, and the second apparatus may be configured to perform the method on the second device side described in any one of the embodiments in FIG. 4, FIG. 6, FIG. 7, and FIG. 8.

In the foregoing embodiments in this specification, the descriptions of embodiments have respective focuses. For a part that is not described in detail in an embodiment, refer to the related descriptions in other embodiments. In addition, in embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

It should be noted that, a person of ordinary skill in the art may understand that, all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

## Claims

1. A communication method, wherein the method is applied to a first device; and the method comprises:
sending a first control packet to a second device, wherein the first control packet comprises first transport control option information, and the first transport control option information is used to request to start data transmission from the first device to the second device;
receiving a second control packet from the second device, wherein the second control packet comprises second transport control option information, and the second transport control option information is used to acknowledge start of the data transmission from the first device to the second device; and
sending first data to the second device when a response packet for the second control packet is not sent to the second device.

2. The method according to claim 1, wherein the data transmission from the first device to the second device is performed based on a unidirectional communication connection.

3. The method according to claim 1 or 2, wherein
the sending first data to the second device when a response packet for the second control packet is not sent to the second device comprises any one of the following cases:
carrying the first data via the first control packet;
after sending the first control packet and before receiving the second control packet, sending a first data packet that carries the first data to the second device; or
after receiving the second control packet, sending a first data packet that carries the first data to the second device.

4. The method according to any one of claims 1 to 3, wherein the first control packet further comprises source port information and/or destination port information, the source port information is used to carry an identifier of a first application that is on the first device and that is used to send data, and the destination port information is used to carry an identifier of a second application that is on the second device and that is used to receive data.

5. The method according to any one of claims 1 to 4, wherein the first control packet further comprises sequence number information and/or acknowledgment sequence number information, the sequence number information is used to carry a sending sequence number of the first control packet, and the acknowledgment sequence number information is used to carry an acknowledgment sequence number of the first control packet.

6. The method according to any one of claims 3 to 5, wherein after the sending a first data packet that carries the first data to the second device, the method further comprises:
receiving a first response packet from the second device; and
determining, based on an acknowledgment sequence number carried in the first response packet and a sending sequence number carried in the first data packet, whether to resend the first data packet.

7. The method according to claim 6, wherein the first response packet further comprises first window size option information, and the first window size option information is used to carry first buffer space that is in a resource configured by the second device and that may be used to receive data from the first device; and the method further comprises:
adjusting a data sending rate and/or a size of to-be-sent data based on the first window size option information.

8. The method according to claim 7, wherein the adjusting a data sending rate and/or a size of to-be-sent data based on the first window size option information comprises:
when the first buffer space is less than a first preset threshold, reducing the data sending rate and/or reducing the size of the to-be-sent data; or
when the first buffer space is greater than a second preset threshold, increasing the data sending rate and/or increasing the size of the to-be-sent data, wherein the second preset threshold is greater than or equal to the first preset threshold.

9. The method according to claim 7, wherein the adjusting a data sending rate based on the first window size option information comprises:
when the first buffer space is less than a third preset threshold, suspending sending data to the second device; and
the method further comprises:
receiving a second response packet from the second device, wherein the second response packet comprises second window size option information, and the second window size option information carries second buffer space that is in the resource configured by the second device and that may be used to receive data from the first device; and
when a sending sequence number carried in the second response packet is greater than or equal to a sending sequence number carried in the first response packet, and the second buffer space is not less than the third preset threshold, continuing to send data to the second device.

10. The method according to any one of claims 1 to 9, wherein the method further comprises:
sending a third control packet to the second device, wherein the third control packet comprises third transport control option information, and the third transport control option information is used to request to terminate the data transmission from the first device to the second device; and
receiving a fourth control packet from the second device, wherein the fourth control packet comprises fourth transport control option information, and the fourth transport control option information is used to acknowledge termination of the data transmission from the first device to the second device.

11. The method according to any one of claims 1 to 10, wherein
the first device is configured with a first state machine, and the first state machine is configured to:
when the first device is in an initial state, in response to an event of starting to send data, switch the first device from the initial state to a waiting start acknowledgment state, for the first device to perform an action of sending the first control packet to the second device.

12. The method according to claim 11, wherein the first state machine is further configured to:
when the first device is in the waiting start acknowledgment state, in response to an event of receiving the second control packet, switch the first device from the waiting start acknowledgment state to a sending data state.

13. The method according to claim 12, wherein the first state machine is further configured to:
when the first device is in the sending data state, in response to an event of finishing sending data, switch the first device from the sending data state to a waiting end acknowledgment state, for the first device to perform an action of sending the third control packet to the second device, wherein the third control packet comprises the third transport control option information, and the third transport control option information is used to request to terminate the data transmission from the first device to the second device.

14. The method according to claim 13, wherein the first state machine is further configured to:
when the first device is in the waiting end acknowledgment state, in response to an event of receiving the fourth control packet, switch the first device from the waiting end acknowledgment state to the initial state, wherein the fourth control packet comprises the fourth transport control option information, and the fourth transport control option information is used to acknowledge termination of the data transmission from the first device to the second device.

15. The method according to any one of claims 11 to 14, wherein the first state machine is further configured to:
when the first device is in any one of the waiting start acknowledgment state, the sending data state, and the waiting end acknowledgment state, in response to a local fault event or an event of receiving a fifth control packet sent by the second device, switch the first device to a resetting state, for the first device to perform a reset operation, and for the first device to further perform an action of sending a sixth control packet to the second device when a local fault occurs, wherein
the fifth control packet comprises fifth transport control option information, and the fifth transport control option information is used to reset the data transmission from the first device to the second device; and the sixth control packet comprises sixth transport control option information, and the sixth transport control option information is used to reset the data transmission from the first device to the second device.

16. The method according to claim 15, wherein the first state machine is further configured to:
when the first device is in the resetting state, in response to a reset completion event, switch the first device from the resetting state to the initial state.

17. The method according to any one of claims 1 to 16, wherein the second transport control option information of the second control packet is further used to request to start data transmission from the second device to the first device; and
after the receiving a second control packet from the second device, the method further comprises:
configuring, by the first device, a resource used to receive data from the second device; and
sending, by the first device, a seventh control packet to the second device, wherein the seventh control packet comprises seventh transport control option information, and the seventh transport control option information is used to acknowledge start of the data transmission from the second device to the first device.

18. The method according to claim 17, wherein after the sending a seventh control packet to the second device, the method further comprises:
receiving a second data packet from the second device, wherein the second data packet carries second data; and
sending a third data packet to the second device, wherein the third data packet carries third data, and an acknowledgment sequence number carried in the third data packet is a sending sequence number carried in the second data packet.

19. The method according to claim 17 or 18, wherein the method further comprises:
receiving an eighth control packet from the second device, wherein the eighth control packet comprises eighth transport control option information, and the eighth transport control option information is used to request to terminate the data transmission from the second device to the first device;
releasing, based on the eighth control packet, the resource that is configured by the first device and that is used to receive the data from the second device; and
sending a ninth control packet to the second device, wherein the ninth control packet comprises ninth transport control option information, and the ninth transport control option information is used to acknowledge termination of the data transmission from the second device to the first device.

20. The method according to any one of claims 17 to 19, wherein
the first device is configured with a second state machine, and the second state machine is configured to:
when the first device is in an initial state, in response to the event of receiving the second control packet, switch the first device from the initial state to a receiving data state, for the first device to perform an action of sending the seventh control packet to the second device.

21. The method according to claim 20, wherein the second state machine is further configured to:
when the first device is in the receiving data state, in response to an event of receiving the eighth control packet, switch the first device from the receiving data state to a pending end state, for the first device to perform an action of releasing the resource that is configured by the first device and that is used to receive the data from the second device, and an action of sending the ninth control packet to the second device, wherein
the eighth control packet comprises the eighth transport control option information, and the eighth transport control option information is used to request to terminate the data transmission from the second device to the first device; and the ninth control packet comprises the ninth transport control option information, and the ninth transport control option information is used to acknowledge termination of the data transmission from the second device to the first device.

22. The method according to claim 21, wherein the second state machine is further configured to:
when the first device is in the pending end state, in response to an end completion event, switch the first device from the pending end state to the initial state.

23. The method according to any one of claims 20 to 22, wherein the second state machine is further configured to:
when the first device is in the receiving data state or the pending end state, in response to a local fault event or an event of receiving a tenth control packet sent by the second device, switch the first device to a resetting state, for the first device to perform a reset operation, and for the first device to further perform an action of sending an eleventh control packet to the second device when a local fault occurs, wherein
the tenth control packet comprises tenth transport control option information, and the tenth transport control option information is used to reset the data transmission from the second device to the first device; and the eleventh control packet comprises eleventh transport control option information, and the eleventh transport control option information is used to reset the data transmission from the second device to the first device.

24. The method according to claim 23, wherein the eleventh transport control option information is further used to reset the data transmission from the first device to the second device.

25. The method according to claim 23 or 24, wherein the second state machine is further configured to:
when the first device is in the resetting state, in response to a reset completion event, switch the first device from the resetting state to the initial state.

26. A communication method, wherein the method is applied to a second device; and the method comprises:
receiving a first control packet from a first device, wherein the first control packet comprises first transport control option information, and the first transport control option information is used to request to start data transmission from the first device to the second device;
configuring a resource used to receive data from the first device, and sending a second control packet to the first device, wherein the second control packet comprises second transport control option information, and the second transport control option information is used to acknowledge start of the data transmission from the first device to the second device; and
receiving first data from the first device when a response packet for the second control packet is not received from the first device.

27. The method according to claim 26, wherein the data transmission from the first device to the second device is performed based on a unidirectional communication connection.

28. The method according to claim 26 or 27, wherein
the receiving first data from the first device when a response packet for the second control packet is not received from the first device comprises any one of the following cases:
carrying the first data via the first control packet;
after receiving the first control packet and before sending the second control packet, receiving a first data packet that carries the first data from the first device; or
after sending the second control packet, receiving a first data packet that carries the first data from the first device.

29. The method according to any one of claims 26 to 28, wherein the first control packet further comprises source port information and/or destination port information, the source port information is used to carry an identifier of a first application that is on the first device and that is used to send data, and the destination port information is used to carry an identifier of a second application that is on the second device and that is used to receive data.

30. The method according to any one of claims 26 to 29, wherein the first control packet further comprises sequence number information and/or acknowledgment sequence number information, the sequence number information is used to carry a sending sequence number of the first control packet, and the acknowledgment sequence number information is used to carry an acknowledgment sequence number of the first control packet.

31. The method according to any one of claims 28 to 30, wherein after the receiving a first data packet that carries the first data from the first device, the method further comprises:
sending a first response packet to the first device, wherein an acknowledgment sequence number carried in the first response packet is a sending sequence number carried in the first data packet.

32. The method according to claim 31, wherein the first response packet further comprises first window size option information, the first window size option information is used to carry first buffer space that is in the resource configured by the second device and that may be used to receive data from the first device, and the first window size option information is used by the second device to reversely adjust a data sending rate of the first device and/or adjust a size of to-be-sent data.

33. The method according to claim 32, wherein
when it is detected that the first buffer space is less than a first warning value, the first response packet further comprises the first window size option information.

34. The method according to claim 33, wherein the method further comprises:
clearing received data in the resource configured by the second device; and
when it is detected that second buffer space that is in the resource configured by the second device and that may be used to receive data from the first device is greater than a second warning value, sending a second response packet to the first device for at least one time, wherein the second response packet comprises second window size option information, the second window size option information is used to carry the second buffer space, and the second warning value is greater than or equal to the first warning value.

35. The method according to any one of claims 26 to 34, wherein the method further comprises:
receiving a third control packet from the first device, wherein the third control packet comprises third transport control option information, and the third transport control option information is used to request to terminate the data transmission from the first device to the second device; and
releasing, based on the third control packet, the resource that is configured by the second device and that is used to receive the data from the first device; and sending a fourth control packet to the first device, wherein the fourth control packet comprises fourth transport control option information, and the fourth transport control option information is used to acknowledge termination of the data transmission from the first device to the second device.

36. The method according to any one of claims 26 to 35, wherein
the first device is configured with a first state machine, and the first state machine is configured to:
when the first device is in an initial state, in response to an event of receiving the first control packet, switch the first device from the initial state to a receiving data state, for the second device to perform an action of sending the second control packet to the first device.

37. The method according to claim 36, wherein the first state machine is further configured to:
when the second device is in the receiving data state, in response to an event of receiving the third control packet, switch the second device from the receiving data state to a pending end state, for the second device to perform an action of releasing the resource that is configured by the second device and that is used to receive the data from the first device and an action of sending the fourth control packet to the first device, wherein
the third control packet comprises the third transport control option information, and the third transport control option information is used to request to terminate the data transmission from the first device to the second device; and the fourth control packet comprises the fourth transport control option information, and the fourth transport control option information is used to acknowledge termination of the data transmission from the first device to the second device.

38. The method according to claim 37, wherein the first state machine is further configured to:
when the second device is in the pending end state, in response to an end completion event, switch the second device from the pending end state to the initial state.

39. The method according to any one of claims 36 to 38, wherein the first state machine is further configured to:
when the second device is in the receiving data state or the pending end state, in response to a local fault event or an event of receiving a fifth control packet sent by the second device, switch the second device to a resetting state, for the second device to perform a reset operation, and for the second device to further perform an action of sending a sixth control packet to the first device when a local fault occurs, wherein
the fifth control packet comprises fifth transport control option information, and the fifth transport control option information is used to reset the data transmission from the first device to the second device; and the sixth control packet comprises sixth transport control option information, and the sixth transport control option information is used to reset the data transmission from the first device to the second device.

40. The method according to claim 39, wherein the first state machine is further configured to:
when the second device is in the resetting state, in response to a reset completion event, switch the second device from the resetting state to the initial state.

41. The method according to any one of claims 26 to 40, wherein the second transport control option information of the second control packet is further used to request to start data transmission from the second device to the first device; and
after the sending a second control packet to the first device, the method further comprises:
receiving a seventh control packet from the first device, wherein the seventh control packet comprises seventh transport control option information, and the seventh transport control option information is used to acknowledge start of the data transmission from the second device to the first device.

42. The method according to claim 41, wherein the method further comprises:
sending a second data packet to the first device, wherein the second data packet carries second data; and
receiving a third data packet from the first device, wherein the third data packet carries third data, and an acknowledgment sequence number carried in the third data packet is a sending sequence number carried in the second data packet.

43. The method according to claim 41 or 42, wherein the method further comprises:
sending an eighth control packet to the first device, wherein the eighth control packet comprises eighth transport control option information, and the eighth transport control option information is used to request to terminate the data transmission from the second device to the first device; and
receiving a ninth control packet from the first device, wherein the ninth control packet comprises ninth transport control option information, and the ninth transport control option information is used to acknowledge termination of the data transmission from the second device to the first device.

44. The method according to any one of claims 41 to 43, wherein
the second device is configured with a second state machine, and the second state machine is configured to:
when the second device is in an initial state, in response to an event of starting to send data, switch the second device from the initial state to a waiting start acknowledgment state, for the second device to perform the action of sending the second control packet to the second device.

45. The method according to claim 44, wherein the second state machine is further configured to:
when the second device is in the waiting start acknowledgment state, in response to an event of receiving the seventh control packet, switch the second device from the waiting start acknowledgment state to a sending data state.

46. The method according to claim 45, wherein the second state machine is further configured to:
when the second device is in the sending data state, in response to an event of finishing sending the data, switch the second device from the sending data state to a waiting end acknowledgment state, for the second device to perform an action of sending the eighth control packet to the first device, wherein the eighth control packet comprises the eighth transport control option information, and the eighth transport control option information is used to request to terminate the data transmission from the second device to the first device.

47. The method according to claim 46, wherein the second state machine is further configured to:
when the second device is in the waiting end acknowledgment state, in response to an event of receiving the ninth control packet, switch the second device from the waiting end acknowledgment state to the initial state, wherein the ninth control packet comprises the ninth transport control option information, and the ninth transport control option information is used to acknowledge termination of the data transmission from the second device to the first device.

48. The method according to any one of claims 44 to 47, wherein the second state machine is further configured to:
when the second device is in any one of the waiting start acknowledgment state, the sending data state, and the waiting end acknowledgment state, in response to a local fault event or an event of receiving a tenth control packet sent by the first device, switch the second device to the resetting state, for the second device to perform a reset operation, and for the second device to further perform an action of sending an eleventh control packet to the first device when a local fault occurs, wherein
the tenth control packet comprises tenth transport control option information, and the tenth transport control option information is used to reset the data transmission from the second device to the first device; and the eleventh control packet comprises eleventh transport control option information, and the eleventh transport control option information is used to reset the data transmission from the second device to the first device.

49. The method according to claim 48, wherein the eleventh transport control option information is further used to reset the data transmission from the first device to the second device.

50. The method according to claim 48 or 49, wherein the second state machine is further configured to:
when the second device is in the resetting state, in response to a reset completion event, switch the second device from the resetting state to the initial state.

51. A communication apparatus, wherein the apparatus is a first device or the apparatus is comprised in the first device; and the apparatus comprises:
a sending unit, configured to send a first control packet to a second device, wherein the first control packet comprises first transport control option information, and the first transport control option information is used to request to start data transmission from the first device to the second device; and
a receiving unit, configured to receive a second control packet from the second device, wherein the second control packet comprises second transport control option information, and the second transport control option information is used to acknowledge start of the data transmission from the first device to the second device, wherein
the sending unit is further configured to send first data to the second device when a response packet for the second control packet is not sent to the second device.

52. The apparatus according to claim 51, wherein the data transmission from the first device to the second device is performed based on a unidirectional communication connection.

53. The apparatus according to claim 51 or 52, wherein the sending unit is specifically configured to:
carry the first data via the first control packet;
after the first control packet is sent and before the second control packet is received, send a first data packet that carries the first data to the second device; or
after the second control packet is received, send a first data packet that carries the first data to the second device.

54. The apparatus according to any one of claims 51 to 53, wherein the first control packet further comprises source port information and/or destination port information, the source port information is used to carry an identifier of a first application that is on the first device and that is used to send data, and the destination port information is used to carry an identifier of a second application that is on the second device and that is used to receive data.

55. The apparatus according to any one of claims 51 to 54, wherein the first control packet further comprises sequence number information and/or acknowledgment sequence number information, the sequence number information is used to carry a sending sequence number of the first control packet, and the acknowledgment sequence number information is used to carry an acknowledgment sequence number of the first control packet.

56. The apparatus according to any one of claims 53 to 55, wherein
the receiving unit is further configured to receive a first response packet from the second device; and
the apparatus further comprises a processing unit, wherein the processing unit is configured to determine, based on an acknowledgment sequence number carried in the first response packet and a sending sequence number carried in the first data packet, whether to resend the first data packet.

57. The apparatus according to claim 56, wherein the first response packet further comprises first window size option information, and the first window size option information is used to carry first buffer space that is in a resource configured by the second device and that may be used to receive data from the first device; and the processing unit is specifically configured to:
adjust a data sending rate and/or a size of to-be-sent data based on the first window size option information.

58. The apparatus according to claim 57, wherein the processing unit is specifically configured to:
when the first buffer space is less than a first preset threshold, reduce the data sending rate and/or reduce the size of the to-be-sent data; or
when the first buffer space is greater than a second preset threshold, increase the data sending rate and/or increase the size of the to-be-sent data, wherein the second preset threshold is greater than or equal to the first preset threshold.

59. The apparatus according to claim 57, wherein the sending unit is further configured to:
when the first buffer space is less than a third preset threshold, suspend sending data to the second device;
the receiving unit is further configured to receive a second response packet from the second device, wherein the second response packet comprises second window size option information, and the second window size option information carries second buffer space that is in the resource configured by the second device and that may be used to receive data from the first device; and
the sending unit is further configured to: when a sending sequence number carried in the second response packet is greater than or equal to a sending sequence number carried in the first response packet, and the second buffer space is not less than the third preset threshold, continue to send data to the second device.

60. The apparatus according to any one of claims 51 to 59, wherein
the sending unit is further configured to send a third control packet to the second device, wherein the third control packet comprises third transport control option information, and the third transport control option information is used to request to terminate the data transmission from the first device to the second device; and
the receiving unit is further configured to receive a fourth control packet from the second device, wherein the fourth control packet comprises fourth transport control option information, and the fourth transport control option information is used to acknowledge termination of the data transmission from the first device to the second device.

61. The apparatus according to any one of claims 51 to 60, wherein
the first device is configured with a first state machine, and the first state machine is configured to:
when the first device is in an initial state, in response to an event of starting to send data, switch the first device from the initial state to a waiting start acknowledgment state, for the first device to perform an action of sending the first control packet to the second device.

62. The apparatus according to claim 61, wherein the first state machine is further configured to:
when the first device is in the waiting start acknowledgment state, in response to an event of receiving the second control packet, switch the first device from the waiting start acknowledgment state to a sending data state.

63. The apparatus according to claim 62, wherein the first state machine is further configured to:
when the first device is in the sending data state, in response to an event of finishing sending data, switch the first device from the sending data state to a waiting end acknowledgment state, for the first device to perform an action of sending the third control packet to the second device, wherein the third control packet comprises the third transport control option information, and the third transport control option information is used to request to terminate the data transmission from the first device to the second device.

64. The apparatus according to claim 63, wherein the first state machine is further configured to:
when the first device is in the waiting end acknowledgment state, in response to an event of receiving the fourth control packet, switch the first device from the waiting end acknowledgment state to the initial state, wherein the fourth control packet comprises the fourth transport control option information, and the fourth transport control option information is used to acknowledge termination of the data transmission from the first device to the second device.

65. The apparatus according to any one of claims 61 to 64, wherein the first state machine is further configured to:
when the first device is in any one of the waiting start acknowledgment state, the sending data state, and the waiting end acknowledgment state, in response to a local fault event or an event of receiving a fifth control packet sent by the second device, switch the first device to a resetting state, for the first device to perform a reset operation, and for the first device to further perform an action of sending a sixth control packet to the second device when a local fault occurs, wherein
the fifth control packet comprises fifth transport control option information, and the fifth transport control option information is used to reset the data transmission from the first device to the second device; and the sixth control packet comprises sixth transport control option information, and the sixth transport control option information is used to reset the data transmission from the first device to the second device.

66. The apparatus according to claim 65, wherein the first state machine is further configured to:
when the first device is in the resetting state, in response to a reset completion event, switch the first device from the resetting state to the initial state.

67. The apparatus according to any one of claims 51 to 66, wherein the second transport control option information of the second control packet is further used to request to start data transmission from the second device to the first device; and
the sending unit is further configured to:
configure a resource used to receive data from the second device; and
send a seventh control packet to the second device, wherein the seventh control packet comprises seventh transport control option information, and the seventh transport control option information is used to acknowledge start of the data transmission from the second device to the first device.

68. The apparatus according to claim 67, wherein
the receiving unit is further configured to receive a second data packet from the second device, wherein the second data packet carries the second data; and
the sending unit is further configured to send a third data packet to the second device, wherein the third data packet carries third data, and an acknowledgment sequence number carried in the third data packet is a sending sequence number carried in the second data packet.

69. The apparatus according to claim 67 or 68, wherein
the receiving unit is further configured to receive an eighth control packet from the second device, wherein the eighth control packet comprises eighth transport control option information, and the eighth transport control option information is used to request to terminate the data transmission from the second device to the first device; and
the sending unit is further configured to: release, based on the eighth control packet, the resource that is configured by the first device and that is used to receive the data from the second device; and send a ninth control packet to the second device, wherein the ninth control packet comprises ninth transport control option information, and the ninth transport control option information is used to acknowledge termination of the data transmission from the second device to the first device.

70. The apparatus according to any one of claims 67 to 69, wherein
the first device is configured with a second state machine, and the second state machine is configured to:
when the first device is in an initial state, in response to the event of receiving the second control packet, switch the first device from the initial state to a receiving data state, for the first device to perform an action of sending the seventh control packet to the second device.

71. The apparatus according to claim 70, wherein the second state machine is further configured to:
when the first device is in the receiving data state, in response to an event of receiving the eighth control packet, switch the first device from the receiving data state to a pending end state, for the first device to perform an action of releasing the resource that is configured by the first device and that is used to receive the data from the second device, and an action of sending the ninth control packet to the second device, wherein
the eighth control packet comprises the eighth transport control option information, and the eighth transport control option information is used to request to terminate the data transmission from the second device to the first device; and the ninth control packet comprises the ninth transport control option information, and the ninth transport control option information is used to acknowledge termination of the data transmission from the second device to the first device.

72. The apparatus according to claim 71, wherein the second state machine is further configured to:
when the first device is in the pending end state, in response to an end completion event, switch the first device from the pending end state to the initial state.

73. The apparatus according to any one of claims 70 to 72, wherein the second state machine is further configured to:
when the first device is in the receiving data state or the pending end state, in response to a local fault event or an event of receiving a tenth control packet sent by the second device, switch the first device to a resetting state, for the first device to perform a reset operation, and for the first device to further perform an action of sending an eleventh control packet to the second device when a local fault occurs, wherein
the tenth control packet comprises tenth transport control option information, and the tenth transport control option information is used to reset the data transmission from the second device to the first device; and the eleventh control packet comprises eleventh transport control option information, and the eleventh transport control option information is used to reset the data transmission from the second device to the first device.

74. The apparatus according to claim 73, wherein the eleventh transport control option information is further used to reset the data transmission from the first device to the second device.

75. The apparatus according to claim 73 or 74, wherein the second state machine is further configured to:
when the first device is in the resetting state, in response to a reset completion event, switch the first device from the resetting state to the initial state.

76. A communication apparatus, wherein the apparatus is a second device or the apparatus is comprised in the second device; and the apparatus comprises:
a receiving unit, configured to receive a first control packet from a first device, wherein the first control packet comprises first transport control option information, and the first transport control option information is used to request to start data transmission from the first device to the second device;
a processing unit, configured to configure a resource used to receive data from the first device; and
a sending unit, configured to send a second control packet to the first device, wherein the second control packet comprises second transport control option information, and the second transport control option information is used to acknowledge start of the data transmission from the first device to the second device, wherein
the receiving unit is further configured to receive first data from the first device when a response packet for the second control packet is not received from the first device.

77. The apparatus according to claim 76, wherein the first device transmits data to the second device based on a unidirectional communication connection.

78. The apparatus according to claim 76 or 77, wherein the receiving unit is specifically configured to:
carry the first data via the first control packet;
after the first control packet is received and before the second control packet is sent, receive a first data packet that carries the first data from the first device; or
after the second control packet is sent, receive a first data packet that carries the first data from the first device.

79. The apparatus according to any one of claims 76 to 78, wherein the first control packet further comprises source port information and/or destination port information, the source port information is used to carry an identifier of a first application that is on the first device and that is used to send data, and the destination port information is used to carry an identifier of a second application that is on the second device and that is used to receive data.

80. The apparatus according to any one of claims 76 to 79, wherein the first control packet further comprises sequence number information and/or acknowledgment sequence number information, the sequence number information is used to carry a sending sequence number of the first control packet, and the acknowledgment sequence number information is used to carry an acknowledgment sequence number of the first control packet.

81. The apparatus according to any one of claims 78 to 80, wherein
the sending unit is further configured to send a first response packet to the first device, wherein an acknowledgment sequence number carried in the first response packet is a sending sequence number carried in the first data packet.

82. The apparatus according to claim 81, wherein the first response packet further comprises first window size option information, the first window size option information is used to carry first buffer space that is in the resource configured by the second device and that may be used to receive data from the first device, and the first window size option information is used by the second device to reversely adjust a data sending rate of the first device and/or adjust a size of to-be-sent data.

83. The apparatus according to claim 82, wherein
when it is detected that the first buffer space is less than a first warning value, the first response packet further comprises the first window size option information.

84. The apparatus according to claim 83, wherein
the processing unit is further configured to clear received data in the resource configured by the second device; and
the sending unit is further configured to: when it is detected that second buffer space that is in the resource configured by the second device and that may be used to receive data from the first device is greater than a second warning value, send a second response packet to the first device for at least one time, wherein the second response packet comprises second window size option information, the second window size option information is used to carry the second buffer space, and the second warning value is greater than or equal to the first warning value.

85. The apparatus according to any one of claims 76 to 84, wherein
the receiving unit is further configured to receive a third control packet from the first device, wherein the third control packet comprises third transport control option information, and the third transport control option information is used to request to terminate the data transmission from the first device to the second device;
the processing unit is further configured to release, based on the third control packet, the resource that is configured by the second device and that is used to receive the data from the first device; and
the sending unit is further configured to send a fourth control packet to the first device, wherein the fourth control packet comprises fourth transport control option information, and the fourth transport control option information is used to acknowledge termination of the data transmission from the first device to the second device.

86. The apparatus according to any one of claims 76 to 85, wherein
the first device is configured with a first state machine, and the first state machine is configured to:
when the first device is in an initial state, in response to an event of receiving the first control packet, switch the first device from the initial state to a receiving data state, for the second device to perform an action of sending the second control packet to the first device.

87. The apparatus according to claim 86, wherein the first state machine is further configured to:
when the second device is in the receiving data state, in response to an event of receiving the third control packet, switch the second device from the receiving data state to a pending end state, for the second device to perform an action of releasing the resource that is configured by the second device and that is used to receive the data from the first device and an action of sending the fourth control packet to the first device, wherein
the third control packet comprises the third transport control option information, and the third transport control option information is used to request to terminate the data transmission from the first device to the second device; and the fourth control packet comprises the fourth transport control option information, and the fourth transport control option information is used to acknowledge termination of the data transmission from the first device to the second device.

88. The apparatus according to claim 87, wherein the first state machine is further configured to:
when the second device is in the pending end state, in response to an end completion event, switch the second device from the pending end state to the initial state.

89. The apparatus according to any one of claims 86 to 88, wherein the first state machine is further configured to:
when the second device is in the receiving data state or the pending end state, in response to a local fault event or an event of receiving a fifth control packet sent by the second device, switch the second device to a resetting state, for the second device to perform a reset operation, and for the second device to further perform an action of sending a sixth control packet to the first device when a local fault occurs, wherein
the fifth control packet comprises fifth transport control option information, and the fifth transport control option information is used to reset the data transmission from the first device to the second device; and the sixth control packet comprises sixth transport control option information, and the sixth transport control option information is used to reset the data transmission from the first device to the second device.

90. The apparatus according to claim 89, wherein the first state machine is further configured to:
when the second device is in the resetting state, in response to a reset completion event, switch the second device from the resetting state to the initial state.

91. The apparatus according to any one of claims 76 to 90, wherein the second transport control option information of the second control packet is further used to request to start data transmission from the second device to the first device; and
the receiving unit is further configured to receive a seventh control packet from the first device, wherein the seventh control packet comprises seventh transport control option information, and the seventh transport control option information is used to acknowledge start of the data transmission from the second device to the first device.

92. The apparatus according to claim 91, wherein
the sending unit is further configured to send a second data packet to the first device, wherein the second data packet carries the second data; and
the receiving unit is further configured to receive a third data packet from the first device, wherein the third data packet carries third data, and an acknowledgment sequence number carried in the third data packet is a sending sequence number carried in the second data packet.

93. The apparatus according to claim 91 or 92, wherein
the sending unit is further configured to send an eighth control packet to the first device, wherein the eighth control packet comprises eighth transport control option information, and the eighth transport control option information is used to request to terminate the data transmission from the second device to the first device; and
the receiving unit is further configured to receive a ninth control packet from the first device, wherein the ninth control packet comprises ninth transport control option information, and the ninth transport control option information is used to acknowledge termination of the data transmission from the second device to the first device.

94. The apparatus according to any one of claims 91 to 93, wherein
the second device is configured with a second state machine, and the second state machine is configured to:
when the second device is in an initial state, in response to an event of starting to send data, switch the second device from the initial state to a waiting start acknowledgment state, for the second device to perform the action of sending the second control packet to the second device.

95. The apparatus according to claim 94, wherein the second state machine is further configured to:
when the second device is in the waiting start acknowledgment state, in response to an event of receiving the seventh control packet, switch the second device from the waiting start acknowledgment state to a sending data state.

96. The apparatus according to claim 95, wherein the second state machine is further configured to:
when the second device is in the sending data state, in response to an event of finishing sending the data, switch the second device from the sending data state to a waiting end acknowledgment state, for the second device to perform an action of sending the eighth control packet to the first device, wherein the eighth control packet comprises the eighth transport control option information, and the eighth transport control option information is used to request to terminate the data transmission from the second device to the first device.

97. The apparatus according to claim 96, wherein the second state machine is further configured to:
when the second device is in the waiting end acknowledgment state, in response to an event of receiving the ninth control packet, switch the second device from the waiting end acknowledgment state to the initial state, wherein the ninth control packet comprises the ninth transport control option information, and the ninth transport control option information is used to acknowledge termination of the data transmission from the second device to the first device.

98. The apparatus according to any one of claims 94 to 97, wherein the second state machine is further configured to:
when the second device is in any one of the waiting start acknowledgment state, the sending data state, and the waiting end acknowledgment state, in response to a local fault event or an event of receiving a tenth control packet sent by the first device, switch the second device to the resetting state, for the second device to perform a reset operation, and for the second device to further perform an action of sending an eleventh control packet to the first device when a local fault occurs, wherein
the tenth control packet comprises tenth transport control option information, and the tenth transport control option information is used to reset the data transmission from the second device to the first device; and the eleventh control packet comprises eleventh transport control option information, and the eleventh transport control option information is used to reset the data transmission from the second device to the first device.

99. The apparatus according to claim 98, wherein the eleventh transport control option information is further used to reset the data transmission from the first device to the second device.

100. The apparatus according to claim 98 or 99, wherein the second state machine is further configured to:
when the second device is in the resetting state, in response to a reset completion event, switch the second device from the resetting state to the initial state.

101. A communication apparatus, wherein the apparatus comprises a memory and a processor, the memory stores computer program instructions, and the processor runs the computer program instructions to enable the apparatus to perform the method according to any one of claims 1 to 25 or claims 26 to 50.

102. A communication system, wherein the communication system comprises a first apparatus and a second apparatus, the first apparatus is configured to perform the method according to any one of claims 1 to 25, and the second apparatus is configured to perform the method according to any one of claims 26 to 50.

103. A vehicle, wherein the vehicle comprises a first apparatus or a second apparatus, the first apparatus is configured to perform the method according to any one of claims 1 to 25, and the second apparatus is configured to perform the method according to any one of claims 26 to 50.

104. A computer-readable storage medium, wherein the computer-readable storage medium stores program instructions, and the program instructions are used to implement the method according to any one of claims 1 to 25 or claims 26 to 50.
